(19) Europäisches Patentamt
European Patent Office
Office européen des brevets

(11) **EP 3 401 879 B1**

(12) **FASCICULE DE BREVET EUROPEEN**

(45) Date de publication et mention de la délivrance du brevet:
**17.02.2021 Bulletin 2021/07**

(51) Int Cl.:
***G06T 17/20*** *(2006.01)*

(21) Numéro de dépôt: **18178543.7**

(22) Date de dépôt: **19.03.2013**

(54) **PROCÉDÉ DE MODÉLISATION D'UN OBJET TRIDIMENSIONNEL À PARTIR D'IMAGES BIDIMENSIONNELLES DE CET OBJET PRISES SOUS DIFFÉRENTS ANGLES**

**MODELLIERUNGSVERFAHREN EINES 3D-OBJEKTS AUF DER BASIS VON ZWEIDIMENSIONALEN BILDERN DIESES OBJEKTS, DIE AUS VERSCHIEDENEN BLICKWINKELN AUFGENOMMEN WURDEN**

**METHOD FOR MODELLING A THREE-DIMENSIONAL OBJECT FROM TWO-DIMENSIONAL IMAGES OF THE OBJECT TAKEN FROM DIFFERENT ANGLES**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2012 FR 1252450**

(43) Date de publication de la demande:
**14.11.2018 Bulletin 2018/46**

(62) Numéro(s) de document de la (des) demande(s) initiale(s) en application de l'article 76 CBE:
**13711037.5 / 2 828 834**

(73) Titulaire: **Fittingbox**
**31670 Labege (FR)**

(72) Inventeurs:
• **DEHAIS, Christophe**
**31200 TOULOUSE (FR)**
• **MAMMOU, Khaled**
**THORNHILL L3T7Y6 (CA)**
• **CHOUKROUN, Ariel**
**31650 SAINT ORENS DE GAMEVILLE (FR)**
• **LE GALLOU, Sylvain**
**31650 SAINT ORENS DE GAMEVILLE (FR)**

(74) Mandataire: **Ipside**
**6, Impasse Michel Labrousse**
**31100 Toulouse (FR)**

(56) Documents cités:
**FR-A1- 2 955 409**

• **ARIEL SHAMIR: "A survey on Mesh Segmentation Techniques", COMPUTER GRAPHICS FORUM, vol. 27, no. 6, 4 janvier 2008 (2008-01-04), pages 1539-1556, XP055332257, DOI: 10.1111/j.1467-8659.2007.01103.x**
• **Anonymous: "Color calibration - Wikipedia, the free encyclopedia", , 24 février 2012 (2012-02-24), XP055090795, Extrait de l'Internet: URL:http://en.wikipedia.org/w/index.php?title=Color_calibration&oldid=478535326 [extrait le 2013-11-28]**

EP 3 401 879 B1

## Description

L'invention concerne un modèle et un procédé de production de modèles 3D photo-réalistes, dynamiques, adaptatif pour la visualisation et l'essayage temps réel.

## Contexte de l'invention et problème posé

Le contexte de l'invention est celui de l'essayage virtuel d'objet en temps réel d'une manière la plus réaliste possible, ces objets étant typiquement mais non limitativement des lunettes à intégrer dans une photographie ou une vidéo, représentant le visage d'une personne orientée sensiblement en face de la caméra.

La croissance de la vente sur internet, un stock limité ou toute autre raison empêchant ou gênant l'essayage réel d'objet réel génère un besoin d'essayage virtuel de cet objet. Les solutions actuelles se basant sur une réalité virtuelle ou sur une réalité augmentée sont insuffisantes dans le cas des lunettes car elles manquent de réalisme ou d'interactivité. De plus, elles nécessitent la plupart du temps beaucoup de données et beaucoup de temps de calcul.

On connait déjà dans ce domaine la demande de brevet FR 1050305, du même déposant, déposée le 18 janvier 2010.

## Exposé de l'invention

L'invention est définie par la revendication 1. Un autre aspect de l'invention concerne un **procédé de numérisation d'un objet tridimensionnel,** ledit objet comportant éventuellement des parties transparentes ou réfléchissantes, à partir de vues bidimensionnelles de cet objet, caractérisé en ce qu'il comporte :

- une étape de solidarisation en mouvement de l'objet à un support, pivotant selon un axe vertical, disposé face à au moins deux appareils de prise de vues espacés verticalement,
- une étape d'acquisition de vues de l'objet par les appareils de prise de vues, durant une rotation de l'objet autour de l'axe vertical,
- une étape de correction colorimétrique des images acquises.

L'étape de correction colorimétrique comprend avantageusement :

- l'obtention d'un ensemble de couples couleur réelle - couleur enregistrée par les appareils de prise de vues,
- l'établissement d'un modèle paramétrique de fonction de transfert couleur réelle - couleur enregistrée, utilisant un modèle générique de transformation non rigide de l'espace de couleur,

le modèle générique prenant avantageusement la forme d'une spline de type plaque mince.

L'invention vise plus précisément un **procédé de numérisation** comportant également une étape de calibrage géométrique consistant en la prise de vues d'une mire de géométrie connue par les appareils de prise de vues et le calcul des paramètres intrinsèques et extrinsèques des caméras de la machine d'acquisition.

L'étape de calibrage géométrique emploie, dans une mise en œuvre particulière, une technique de *structure-from-motion* et utilise une mire de calibrage composé de sphères métalliques colorées, de diamètre connu et maintenues à des positions adaptées à limiter les occultations de sphères entre elles et à répartir uniformément leurs positions dans le champ visuel des caméras,

Chaque caméra acquérant une séquence d'image de la mire à différentes orientations obtenues en plaçant la mire sur un plateau tournant autour de l'axe vertical,

Le procédé comportant une étape de repérage, dans un ensemble de vues de la mire de calibrage, de la position de la projection des centres de chaque sphère colorée,

Le calcul, sur la base de ces positions, des paramètres internes et des positions et orientations de chaque appareil de prise de vues.

L'étape de calcul détermine préférentiellement :

des transformations 3D rigides permettant d'exprimer un point dans le repère de l'objet en un point dans les repères de chaque caméra.

des paramètres de l'opération de projection permettant de calculer les coordonnées 2D dans l'image produite par chaque caméra d'un point exprimé dans le repère de celle-ci.

d'un facteur d'échelle permettant d'exprimer les points 3D de l'objet dans un repère métrique.

Dans une mise en œuvre avantageuse, l'étape de calibrage géométrique comprend trois étapes principales :

- Extraction des projections des amers 3D (centres des sphères) : cette étape comprend une série de traitements des images d'entrée, conduisant à la détermination du centre des empreintes (supposées) circulaires des projections des sphères,
- Reconstruction métrique de la scène : cette étape permet une reconstruction initiale de la scène (points 3D) et des caméras (paramètres internes et externes). Elle nécessite de déterminer les trajectoires elliptiques de chaque amers.
- Ajustement de faisceaux : cette étape permet de raffiner les paramètres trouvés à l'étape précédente, à la fois les paramètres internes et externes des caméras et les positions des amers 3D. Raffiner ces positions conjointement aux paramètres de positions et orientations des caméras et leurs paramètres internes, permet de rendre le résultat quasiment insensible à l'étape de triangulation précédente. La précision finale dépend alors presque uniquement de la précision de localisation des projections des amers 3D.

L'étape de calibrage géométrique comporte avantageusement :

- une étape préalable consistant à déterminer la distribution des couleurs de chaque sphère dans un espace colorimétrique adapté (en pratique, nous utilisons l'espace HSV Hue Saturation value), étape dans laquelle, étant donnée une image comportant l'ensemble des sphères, et une sélection de zones recouverte entièrement par l'image de chaque sphère, les caractéristiques de cette distribution de couleur sont déterminées (par exemple, si la distribution est supposée gaussienne, la moyenne et l'écart-type suffisent),
- une étape d'extraction des sphères durant laquelle, pour chaque image, et pour chaque sphère, on répète les étapes suivantes :

  i- classification des pixels en deux classes Sphère / Fond selon la probabilité d'être dans l'image de la sphère considérée,
  ii- Extraction des composantes connexes dans le masque de la classe Sphère,
  iii- Rejet des composantes connexes non satisfaisantes selon leur propriété géométrique : rapport d'élongation, aire,
  iv- Sur chaque composante non rejetée à l'étape iii, extraction des points contours, dans l'image originale,
  v- Ajustement robuste et précis d'un cercle sur les points de contours,
  vi- Extraction du centre du cercle,

- une étape de détermination de la présence ou non dans l'image de la sphère considérée
- et, dans le cas où la sphère est effectivement visible dans sa totalité dans l'image, d'obtention du centre de sa projection.

L'invention vise sous un autre aspect un **procédé de construction d'images virtuelles** d'un objet tridimensionnel à partir d'images bidimensionnelles de cet objet prises sous différents angles selon au moins deux directions, comportant des phases suivantes :

1. Détourage d'au moins une partie des images 2D acquises, afin de calculer un ensemble de silhouettes 2D des lunettes 500 à reconstruire.
2. calcul, sur la base des silhouettes 2D obtenues, d'une représentation volumétrique de l'objet 500.
3. calcul, par un algorithme d'extraction de surfaces d'une représentation surfacique de l'objet 500.
4. lissage et simplification du maillage surfacique 3D de l'objet 500

Le procédé de construction d'images virtuelles comprend avantageusement également :

- une étape de lissage adaptée à des objets manufacturés présentant des courbures constantes par morceau.
- une étape de représentation dynamique de l'apparence d'un objet
- une étape de rendu photoréaliste d'objet simulant la variation d'apparence liée à l'angle de vue de l'objet.

Le détourage utilise, dans une mise en œuvre particulière, un remplissage des trous non désirés du volume 3D, exploitant la reprojection du volume 3D précédemment détouré dans la vue à détourer.

L'étape de détourage utilise, dans une mise en œuvre particulière, en entrées des images de fonds préalablement choisis, pris par les cameras pour un point de vue, et des images de l'objet sous un angle donné pour les divers fonds considérés et calcule un masque binaire de décision matière/fond.

Selon une mise en œuvre particulière, l'étape de détourage utilise un ensemble de fonds créés selon un procédé suivant :

- à partir d'un ensemble de règles donnant des valeurs aux paramètres (motif, couleur, fréquence, phase), un premier fond de la taille de la résolution de l'écran d'affichage est créé,
- un ensemble de fonds complémentaires, définis par rapport à ce fond original sont ensuite générés selon les règles suivantes :

  • Complémentarité des couleurs : on crée le fond complémentaire par inversion de la couleur autour de la couleur neutre, telle que perçue dans l'image,
  • Déphasage : on propose un fond comportant des déphasages de la taille d'un carré en x et en y,
  • un fond décalé d'une demi-taille de carré est ajouté,
  • Fréquence : plusieurs tailles sont proposées pour alterner entre les effets bénéfiques d'une fréquence haute et des fréquences basses.

Plus précisément, pour une image donnée, représentant un point de vue sous un couple d'angle visant l'objet à une distance donnée, l'étape de détourage comprend des étapes suivantes :

1. Mesure du bruit du capteur sur des zones connues de l'image et considérées comme ne contenant pas de matière :
2. Pour chacun des fonds

   a/ Création de l'image de différence,
   b/ Séparation en classes : 1 matière, premier plan, 0 non matière, arrière plan,
   c/ Traitement pour enlever le bruit éventuel,

3. Union des masques binaires de décision matière/fond

La technique utilise préférentiellement un choix de vues qui favorise les effets de réfraction et diffraction et permet une séparation aisée des classes.
L'invention vise, sous encore un autre aspect, un **procédé de construction d'images virtuelles, dans le cas où l'objet est une paire de lunettes,** comportant des étapes suivantes, éventuellement utilisées en conjonction :

- une étape d'aide au positionnement des paires de lunettes dans le champ de vision.
- une étape de segmentation du modèle numérique d'une paire de lunettes en 2 branches et le reste de la monture, avec définition des points de pivot.
- une étape de symétrisation des modèles de paires de lunettes
- une étape permettant la reconstruction semi-automatique de verre de lunette utilisant le tracé d'un chemin 3D, lui-même déterminé de manière semi-automatique.
- une étape de génération de verres de lunettes par approximation paramétrique garantissant une courbure constante.
- une étape de production assistée de modèle de paires de lunettes proche d'un modèle existant

Le procédé de détourage utilise avantageusement un fond rétro-éclairé neutre pour séparer l'objet du fond dans les images.
Le système présenté permet la numérisation d'objets tridimensionnels.
Les modèles numériques produits sont de plusieurs formes :

- des photographies de grande qualité (haute résolution, fidélité d'apparence),
- des aperçus sur 360° de l'objet,
- des modèles numériques tridimensionnels utilisables dans des systèmes de réalité augmentée (par exemple des applications d'essayage virtuel, mondes virtuels, etc.).

Le système comprend un environnement lumineux et un ensemble d'appareils photographiques offrant aux représentations mentionnées ci-dessus un caractère photoréaliste crucial dans les applications de Réalité Augmentée. La qualité de la reconstruction géométrique et la mise à l'échelle métrique en font une réplique de l'objet fidèle et dynamiquement intégrable dans un flux de réalité augmentée photoréaliste.
Les fonctionnalités innovantes du système sont :

1) L'automatisation du détourage de l'objet par rapport au fond dans les prises de vues réalisées ;
2) La capture de l'apparence dynamique de l'objet ;
3) La reproduction (rendu) de l'apparence dans une vue quelconque ;
4) La reconstruction automatique de la géométrie de l'objet dans un repère normalisé (garantie sur l'orientation, la position et la taille);

5) La modélisation indépendante des différentes parties de l'objet. Dans le cas de paires de lunettes, la monture et les verres sont modifiables individuellement ;

6) La manipulation de l'apparence d'un objet afin de créer une apparence différente ;

7) La représentation de l'apparence de l'objet est compacte et supporte la scalabilité en qualité (capacité à augmenter le niveau de qualité) pour la diffusion (streaming) des modèles d'objet à travers différents réseaux ;

8) La manipulation de la géométrie de l'objet afin de la rendre symétrique lorsque l'objet réel est censé être symétrique mais a des défauts, sans en détruire les détails ;

9) Un support d'objet permettant l'acquisition de paires de lunettes avec un minimum d'artefacts sur l'apparence et la géométrie, et une disposition à l'intégration pour l'utilisation applicative, par exemple l'essayage virtuel en réalité augmentée.

10) Un nouveau procédé de calibrage multi caméras très précis.

11) La reconstruction très précise de la géométrie de l'objet, inférieure au 20eme de millimètre actuellement, et directement liée à la qualité des appareils de prise de vue.

12) Dans le cas d'un objet lunettes, l'utilisation de ce modèle pour de l'essayage virtuel sur flux vidéo ou photo d'une personne réelle. Ainsi, nous revendiquons l'essayage métrique de la paire de lunettes reconstruite sur le visage, qui constitue une simulation de porté temps-réel et photoréaliste lorsqu'elle est couplée à la connaissance de la métrique du visage qui porte les lunettes. La précision du porté de la lunette virtuelle est ainsi inférieure au millimètre.

La création d'un modèle 3D dynamique (géométrie et apparence) suit quatre étapes :

1) La prise de vues ;

2) La reconstruction de la géométrie ;

La construction d'un modèle d'apparence de l'objet, sous la forme d'une texture dynamique et paramétrable ainsi que d'effets lumineux dynamiques et paramétrables;

3) La correction de la géométrie et de l'apparence acquises pour éliminer les défauts inhérents à tout procédé de numérisation 3D.

L'invention vise les éléments suivants, éventuellement mis en œuvre conjointement :

- un processus de reconstruction 3D par silhouettes 2D permettant de gérer des lunettes réfléchissantes et transparentes.

- un processus de correction de détourage combinant des approches 2D, 3D et 2D/3D manuelles, semi-automatiques et automatiques.

- un procédé de correction colorimétrique des images acquises.

- des supports spécifiquement conçus pour le maintien de paires de lunettes durant l'acquisition, ne perturbant pas la qualité de celle-ci.

- un système d'acquisition de vues en séquence entièrement paramétrable et automatisable par un système de script.

- un système d'aide au positionnement des paires de lunettes dans le champ de vision.

- une technique de lissage adaptée à des objets manufacturés présentant des courbures constantes par morceau.

- une technique versatile de détourage exploitant plusieurs approches en fonction de leur adaptation à l'objet numérisé : approche manuelle de détourage des vues 2D, approche manuelle de détourage du volume 3D généré, approche d'aide au remplissage des trous non désirés du volume 3D, approche exploitant la reprojection du volume 3D précédemment détouré dans la vue à détourer.

- une technique permettant de segmenter le modèle numérique d'une paire de lunettes en 2 branches et le reste de la monture, avec définition des points de pivot.

- une technique de symétrisation des modèles de paires de lunettes

- une technique permettant la reconstruction semi-automatique de verre de lunette utilisant le tracé d'un chemin 3D, lui-même déterminé de manière semi-automatique.

- une technique de représentation dynamique de l'apparence d'un objet

- une technique de rendu photoréaliste d'objet simulant la variation d'apparence liée à l'angle de vue de l'objet.

- un procédé automatique de génération de verres de lunettes par approximation paramétrique garantissant une courbure constante.

- une technique permettant la production assistée de modèle de paires de lunettes proche d'un modèle existant (changement sur l'apparence seulement, sur la matière seulement, sur le type de verre seulement ou une combinaison de ces variations).

**Présentation des figures**

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :

Figure 1 : schéma synoptique du processus de génération de lunettes,
Figure 2 : guides de prise de vues,
Figure 3 : illustration d'un "visual-hull" obtenu par l'analyse de trois vues 2D,
Figure 4 : configurations définies par l'algorithme de "Marching Cubes" et les triangulations correspondantes,
Figure 5 : principe de simplification du maillage,
Figure 6 : Interface de segmentation semi-automatique des branches,
Figure 7 : extraction de squelette,
Figure 8 : déformation non rigide de la branche,
Figure 9 : reconstruction d'un verre de lunettes 3D,
Figure 10 : schéma de mire,
Figure 11 : exemple de prise de vue de la mire et trajectoires des boules estimées,
Figure 12 : un organigramme de calibration géométrique des caméras,
Figure 13 : une illustration des éléments fixes du mouvement de rotation d'une sphère d'une mire de calibration géométrique.

**Description détaillée d'un mode de réalisation de l'invention**

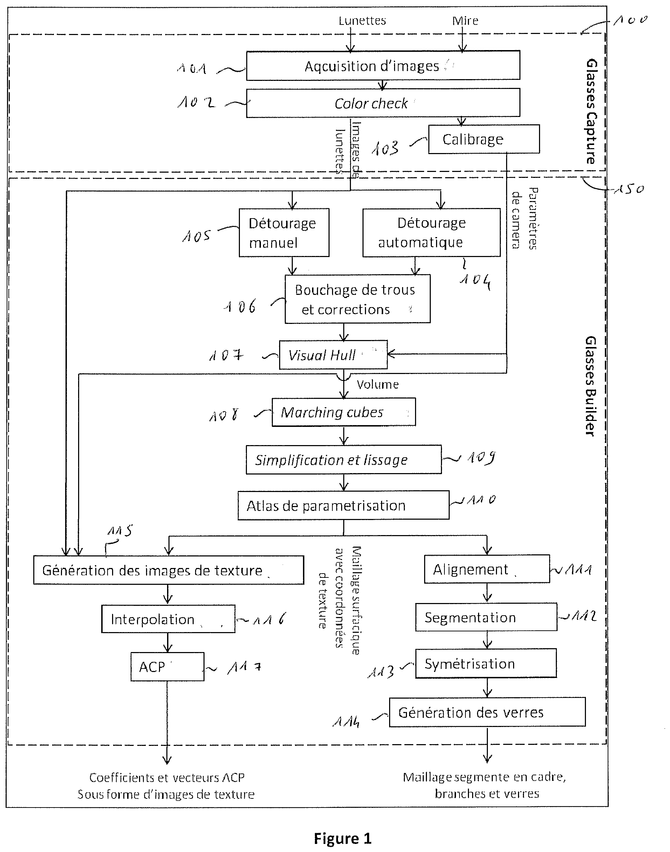

La figure 1 présente le schéma synoptique d'un processus d'acquisition 100 (noté "Glasses Capture" sur la figure 1) et d'un processus de reconstruction 3D 150 de lunettes 500 (noté "Glasses Builder" sur la figure 1), dans un exemple non limitatif de mise en œuvre, utilisant une machine de prise de vue 50 (également appelée machine d'acquisition, et non illustrée sur la figure 1), représentative d'un mode de réalisation de l'invention.

**Phase 1. Acquisition des données** : **machine et setup**

Des lunettes 500 sont positionnées dans la machine de prise de vue 50. Les lunettes 500 sont maintenues en position par un support de lunettes prévu à cet effet.

Les lunettes 500 pivotent autour d'un axe Z (figure 1). Cet axe coïncide ici avec l'axe vertical normal lors du port de lunettes par un utilisateur. Cette disposition n'est pas limitative, et d'autres axes pourraient être choisis. Des appareils photos/caméras disposés à différentes hauteurs, le long de cet axe vertical Z, permettent d'obtenir des images des lunettes 500 de différentes hauteurs. Suite à l'acquisition, les images des lunettes 500 sont transférées sur un serveur distant.

**I.A.** Etape 101. Acquisition d'images 2D de qualité pour la reconstruction et la visualisation

1. Machine

La machine d'acquisition est constituée de plusieurs sous-ensembles :

- Support d'appareils photos ;
- Support de lunettes et plateau tournant ;
- Structure d'environnement lumineux ; et
- Eclairages.

Plusieurs appareils photos (typiquement une demi-douzaine) sont positionnés sur deux rails verticaux A et B de la machine. Le nombre de rails et leur orientation peuvent différer de cet exemple. La position des appareils photo peut être ajustée en fonction des besoins. Les rails peuvent fixer un nombre variable d'appareils (entre 1 et 10 appareils) selon les besoins.

Un plateau tournant est fixé sur le rail noté « C » sur la figure. Ce plateau tournant permet de faire pivoter le support de la lunette selon l'axe Z. De cette manière, les lunettes 500 peuvent être photographiées, par n'importe lequel des appareils photo, sous n'importe quel angle de prise de vues autour de l'axe vertical Z.

Le plateau tournant est piloté par une carte électronique de contrôle elle-même interfacée avec le PC. Les lunettes 500 (ou plus généralement l'objet à numériser) sont positionnées au centre de la machine sur un support lunette relié au plateau tournant. Les plateaux tournants sont facilement échangeables via un système d'aimants.

Le support lunette est entouré d'une structure d'environnement lumineux constitué de rails en aluminium qui maintiennent des panneaux de plexiglass (marque déposée) diffusant. Les panneaux diffusants servent à diffuser et à uniformiser la lumière provenant des éclairages. La structure d'environnement lumineux est éclairée par des projecteurs comme par exemple des projecteurs à LED.

2. Prise de vue

Photo ou reconstruction

a) Supports pour les montures de lunettes

Les lunettes 500 sont maintenues en position par un support conçu spécifiquement. Différents supports de lunettes peuvent êtres utilisés pour différents types de traitement.

Le support servant à la prise de vue permet de :

- Maintenir les lunettes 500 dans une position identique à la position qu'aurait la lunette portée sur un vrai visage. En particulier, les branches de la lunette sont écartées ce qui reproduit l'écartement créé lorsque la lunette est portée.
- Occulter le moins possible la lunette :
- Obtenir un positionnement réglable et précis et standard du positionnement de la lunette.

Pour parvenir à concilier ces contraintes, le support peut être constitué de 2 ou 3 « bras » venant maintenir en position les lunettes 500. Dans le cas d'un support à trois points de contacts, les lunettes 500 sont maintenues au bout des deux branches ainsi qu'au niveau du pont de la monture. Dans le cas d'un support à deux points de contacts, les lunettes 500 sont maintenues en position au bout des deux branches uniquement.

3. Support à deux points de contacts

Nous proposons deux alternatives : une utilisant la contrainte de la force de fermeture et du poids des lunettes 500, et l'autre avec deux pinces qui fixent la position des branches.

3.1. Support par contraintes de force de fermeture et poids

Le support comporte pour chaque branche une attache à deux tiges entre lesquelles une branche de la monture est placée. Cette solution permet, sans serrage, de maintenir la monture stable par l'effet de son propre poids.

3.2. Support à pinces

Le support à pinces consiste à positionner une pince sur chaque branche. Ces pinces sont reliées à des tiges solidaires du plateau et réglables en largeur.

4. Support à un point de contact

Pour utiliser un point de contact, nous utilisons un système de fils en nylon qui permet de pendre l'objet. Dans ce cas, ce sont les caméras qui tournent autour de l'objet pendu.

a) Pilotage assisté des supports et positionnement des lunettes 500

Le réglage de la position de la lunette peut se faire de manière assistée par ordinateur :

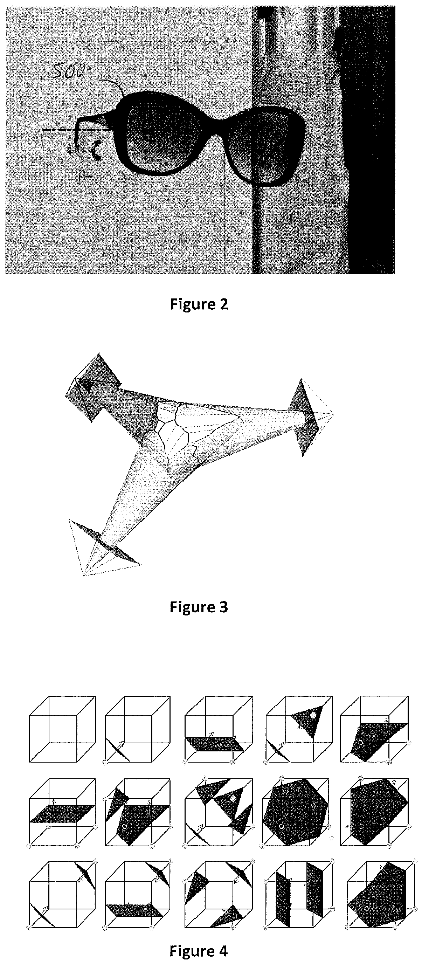

- La position de la lunette est visualisable en temps réel avec le logiciel de prise de vue. Des guides de prise de vue (voir figure 2) sont affichés sur le flux vidéo pour aider l'opérateur dans le positionnement de la lunette.
- Les parties mobiles du support qui sont déplacées lors du réglage peuvent être déplacées de manière manuelle (par un système de vis-écrou par exemple) ou pilotées via l'ordinateur et déplacées par un actionneur mécanique (servomoteur, moteur pas à pas par exemple).

b) Prise de vue et acquisition / transfert des données

Le plateau tournant ainsi que les appareils photos sont pilotés par un logiciel dédié. Chaque appareil photo peut être piloté indépendamment. Le logiciel de prise de vue contient un système de script permettant d'exécuter des scénarios de prise de vue définis à l'avance afin d'automatiser la tache de prise de vue.

5. Pilotage automatique de la machine

Le système d'acquisition de vues en séquence se distingue puisqu'il est entièrement paramétrable et automatisable par un système de script. Un script est un fichier texte comportant une série d'instructions simples permettant de séquencer les opérations de la machine (allumage/extinction des différents éclairages, rotation du plateau tournant, déclenchement des appareils photo, enregistrement des images sur disque dur ou leur envoi sur le réseau)

Le système de prise de vues est également équipé d'une fonctionnalité d'aide au positionnement des paires de lunettes 500, afin de prendre des photographies directement exploitables. Ces aides prennent la forme d'éléments graphiques superposés sur la vue courante de la monture.

**I.B.** Calibrage de la machine

La reconstruction 3D de l'objet capturé nécessite le calibrage des appareils de prise de vue. Nous utilisons une mire de calibrage 3D utilisant un nouveau type d'amer, facile à détecter automatiquement dans des images.

Pour garantir une représentation photoréaliste de l'apparence de l'objet, la justesse de l'acquisition des couleurs doit être assurée. Le procédé utilise une mire de calibrage colorimétrique et un nouveau modèle de correction colorimétrique permettant de modéliser n'importe quelle correction.

Etape 102. Calibrage colorimétrique

a) Objectif

L'objectif du système décrit est la création d'une représentation numérique de la géométrie et de l'apparence de l'objet photographié permettant la reproduction de vues de synthèse photo-réalistes. Il est donc nécessaire de garantir la justesse des couleurs des prises de vue. Une solution (coûteuse et complexe à mettre en œuvre) consiste à utiliser un colorimètre à chaque capture de l'objet.

La solution alternative que nous utilisons consiste à étalonner les appareils de prise de mesure en photographiant une mire colorimétrique placée au même endroit que l'objet. Cette mire est constituée de patchs de couleurs connues. Un logiciel permet ensuite d'extraire dans la photographie de cette mire la couleur enregistrée par la caméra. La couleur réelle et la couleur enregistrée dans l'image sont reliées par une fonction qui dépend de la réponse du capteur de la caméra et des traitements d'images effectués par l'appareil (y compris la compression de l'image).

b) Modélisation et calcul de la transformation colorimétrique

La mire colorimétrique permet d'obtenir un ensemble de couples couleur réelle - couleur enregistrée permettant de déterminer une forme possible de la fonction mentionnée plus haut. Le modèle paramétrique utilisé peut être construit à partir d'un modèle prenant en compte les propriétés optiques et électroniques de la caméra. Une autre approche, utilisée ici à titre d'exemple non limitatif, consiste à utiliser un modèle générique de transformation non rigide de l'espace de couleur R^3. Ce modèle générique prend la forme d'une spline de type plaque mince (Thin Plate Spline). L'ensemble des couples couleur réelle - couleur enregistrée permet de déterminer les paramètres de ce modèle par une méthode d'optimisation au sens des moindres carrés.

Soit $c'_i = (r'_i, g'_i, b'_i)$ la couleur théorique d'un patch de la mire colorimétrique. Soit $c_i = (r_i, g_i, b_i)$ la couleur du patch mesurée dans une image de référence de la mire (la mesure considérée est la moyenne des valeurs des pixels dans une petite zone sélectionnée manuellement. Le modèle de transformation est le suivant :

$$c'_i = A.c_i + b + \sum_{j=1}^{n} \varphi(\|c'_i - x_i\|).w_i$$

avec $\varphi(r) = r^2 \log(r)$. Nous prenons comme points de contrôle $x_i = c'_i$.

La matrice A, le vecteur b et la matrice $W = [w_1 ... w_n]$ sont estimés en optimisant au sens des moindres carrés l'écart entre les couleurs observées transformées par le modèle et les couleurs théoriques.

Etape 103 Calibrage géométrique des appareils de prise de vue.

L'Etape de calibrage géométrique consiste en l'acquisition d'un objet de géométrie connue (mire). L'analyse de cette acquisition permet de calculer les paramètres intrinsèques et extrinsèques des caméras de la machine d'acquisition 50.

Afin de reproduire numériquement la géométrie de l'objet d'intérêt, il est nécessaire de déterminer la relation géométrique entre un point à la surface de l'objet et sa projection dans les images produites par les différents appareils de prise de vue (caméra). La procédure de calibrage des appareils calcule cette relation.

Les données produites par l'étape de calibrage consistent en :

- Les transformations 3D rigides permettant d'exprimer un point dans le repère de l'objet en un point dans les repères de chaque caméra.
- Les paramètres de l'opération de projection permettant de calculer les coordonnées 2D dans l'image produite par chaque caméra d'un point exprimé dans le repère de celle-ci. Ces paramètres prennent généralement la forme d'une matrice 3x3 et d'un jeu de paramètres décrivant les distorsions optiques des objectifs des caméras.
- D'un facteur d'échelle permettant d'exprimer les points 3D de l'objet dans un repère métrique. Ainsi, l'objet est reconstruit dans ces dimensions réelles et peut-être exploiter de manière cohérente dans des applications de Réalité Augmentée et de prise de mesure.

**Procédé de calibrage multi-caméra précis**

Pour exploiter le système support d'objet + caméras comme outils de reconstruction géométrique d'objets, il est nécessaire de déterminer précisément d'une part les paramètres internes de chaque caméra et d'autre part la position relative des caméras vis-à-vis du support. Cette étape de calibrage permet de réduire les exigences de précision lors de la construction et du montage du système.

Le procédé de calibrage emploie une technique de *structure-from-motion* et utilise une mire de calibrage composée de sphères métalliques colorées, de diamètre connu précisément et maintenues à des positions des sorte à limiter les occultations de sphères entre elles et à répartir uniformément leurs positions dans le champ visuel des caméras.

Dans le cas présent, nullement limitatif, on utilise une mire comportant trois ensembles de trois sphères de couleur unie différentes (ici : rouge, vert et bleu). Il est clair que des couleurs différentes pourraient également être utilisées, notamment des couleurs fluorescentes. Les couleurs doivent simplement être séparables par la méthode de segmentation choisie. Le nombre de sphères n'est pas non plus limitatif.

Pour obtenir un échantillonnage de l'espace plus uniforme, la longueur des tubes et leur implantation sur le support (par rapport à l'axe de rotation Z) sont toutes différentes.

Cette approche est innovante par rapport aux méthodes s'appuyant sur des mires planes ou d'autres mires 3D puisque les amers 3D (les centres des sphères) peuvent être localisés dans un grand nombre d'orientation de la mire, ce qui améliore la précision du calibrage.

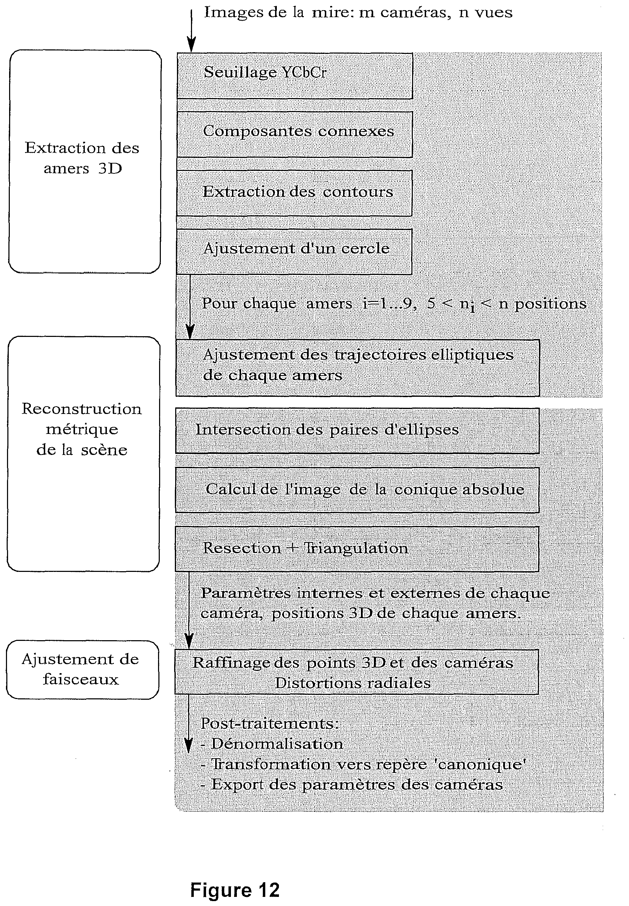

L'étape de calibrage géométrique comprend trois étapes principales (voir figure 12) :

- Extraction des projections des amers 3D (centres des sphères). Cette étape comprend une série de traitements des images d'entrée, conduisant à la détermination du centre des empreintes (supposées) circulaires des projections des sphères,
- Reconstruction métrique de la scène. Cette étape permet une reconstruction initiale de la scène (points 3D) et des caméras (paramètres internes et externes). Elle nécessite de déterminer les trajectoires elliptiques de chaque amers.
- Ajustement de faisceaux. Cette étape permet de raffiner les paramètres trouvés à l'étape précédente, à la fois les paramètres internes et externes des caméras et les positions des amers 3D. Raffiner ces positions conjointement aux paramètres de positions et orientations des caméras et leurs paramètres internes, permet de rendre le résultat quasiment insensible à l'étape de triangulation précédente. La précision finale dépend alors presque uniquement de la précision de localisation des projections des amers 3D.

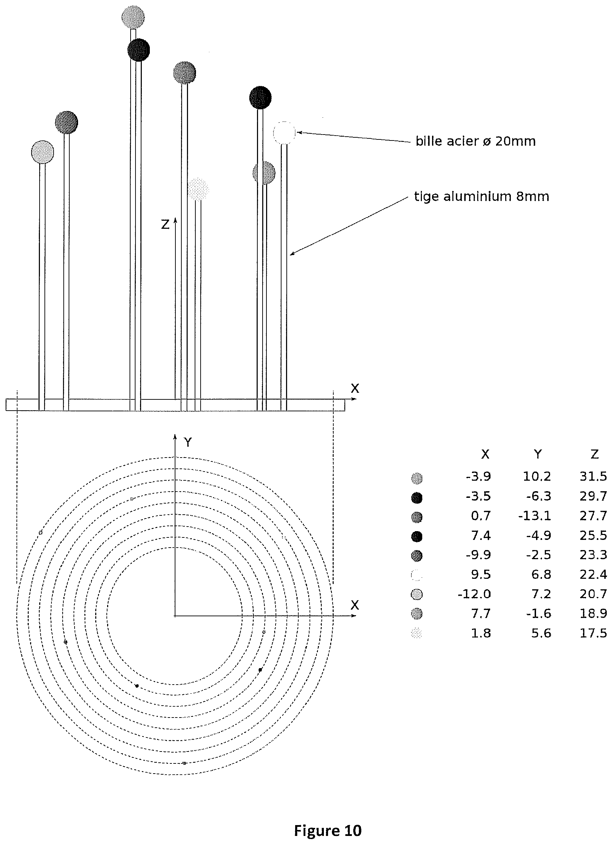

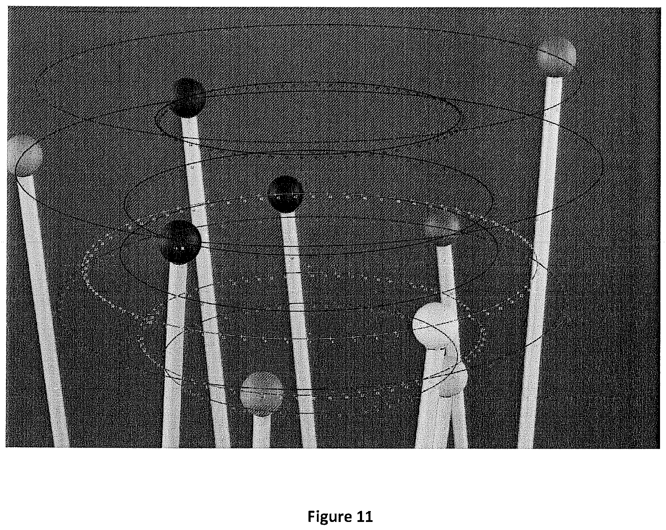

Un schéma de la mire et un exemple de prise de vue sont donnés en figures 10 et 11.

Une première étape repère dans un ensemble de vues de la mire de calibrage, la position de la projection des centres de chaque sphère colorée. Une deuxième étape exploite ces positions, pour calculer précisément les paramètres internes et les positions et orientations de chaque caméra.

**Prises de vue**

Chaque caméra acquiert une séquence d'image de la mire à différentes orientations obtenues en plaçant la mire sur un plateau tournant motorisé. Les centres des sphères produisent un mouvement elliptique, qui est exploité afin de faciliter leur repérage, détecter d'éventuelles erreurs de détection et associer chaque détection à un amer 3D.

**Calcul des centres des sphères dans les images**

*Calcul préalable de la distribution de couleur des sphères*

Une étape préalable consiste à déterminer la distribution des couleurs de chaque sphère dans l'espace colorimétrique utilisé (par exemple HSV : Hue, Saturation, Value). Etant donnée une image comportant l'ensemble des sphères, et une sélection de zones recouverte entièrement par l'image de chaque sphère, la moyenne et l'écart-type de la couleur de chaque sphère est déterminée.

*Extraction des sphères*

Ensuite pour chaque image, et pour chaque sphère, on répète les étapes suivantes

1. classification des pixels en deux classes Sphère-Fond selon la probabilité d'être dans l'image de la sphère considérée.
2. Extraction des composantes connexes dans le masque de la classe Sphère.
3. Rejet des composantes connexes non satisfaisantes selon leur propriété géométrique : rapport d'élongation, aire.
4. Sur chaque région validées à l'étape 3, extraction des points contours, dans l'image originale
5. Ajustement robuste et précis d'un cercle sur les points de contours
6. Extraction du centre du cercle obtenu à l'étape 5.

Après cette séquence d'opérations, le procédé détermine la présence ou non dans l'image de la sphère considérée. Dans le cas où la sphère est effectivement visible dans sa totalité dans l'image, le centre de sa projection est obtenu avec une erreur de localisation très faible (très inférieure à 1 pixel) ;

**Détail des étapes**

1. Classification des pixels. On considère que la couleur (dans l'espace colorimétrique utilisé, par exemple HSV) de la sphère considérée suit une distribution normale de moyenne m et d'écart type s.
2. Classique
3. Classique. Si r = w/h est le rapport d'élongation de la composante connexe (w la largeur, h la hauteur), alors la composante est acceptée si rl < r < rh. Typiquement rl = 0.75 et rh = 1.3.
4. Toutes méthodes d'extraction de contours est utilisable, nous utilisons un seuillage sur la norme du gradient puis la méthode de Canny.
5. L'ajustement du cercle se fait en deux étapes : une première étape utilise la technique d'estimation de paramètres RanSAC pour obtenir (en temps maitrisé avec une forte probabilité) le cercle le plus probable (contenant le plus de points de contour). La technique permet de filtrer les points de contour statistiquement aberrants. Dans un deuxième temps, les paramètres du cercle sont précisément ajustés sur les points de contours restant selon une procédure de minimisation de la distance géométrique. ["Conic Fitting Usina the Geometric Distance" peter Sturm and Pau Gargallo. ACCV 2007].

*Rejet des centres mal détectés en utilisant une séquence d'image*

Malgré la fiabilité de l'étape d'extraction de sphères, des occultations partielles de sphères entre elle peuvent entrainer une erreur de localisation de certains centres. Pour supprimer ces détections erronées, la séquence d'images correspondant à la rotation de la mire sur le plateau tournant est utilisée. On exploite le fait que les différentes positions théoriques du centre de chaque sphère sont localisées sur une ellipse. On ajuste donc de manière robuste une ellipse sur l'ensemble des positions obtenues lors de l'étape d'extraction, et les points statistiquement aberrants sont rejetés. Le seuil de sélection des points statistiquement valides est réglé à l'erreur de localisation des contours.

La figure 11 montre les ellipses détectées pour une caméra particulière et l'ensemble des positions des centres considérées comme suffisamment précises par la méthode ci-dessus.

*Ajustement des trajectoires elliptiques*

À la fin de l'étape précédente, lorsque toutes les vues d'une caméra donnée ont été traitées, on obtient trois listes de points 2D, une par ensemble de sphères (par couleur). Dans chacune des listes, il existe trois trajectoires elliptiques qui peuvent être extraites successivement avec RanSAC. Pour rendre le calcul de cette trajectoire plus précis, les points détectés comme inliers pour chaque ellipse sont utilisés pour réestimer l'ellipse, en minimisant la distance géométrique [Peter Sturm and Pau Gargallo. Conic fitting usina the géométric distance. In Proceedings of the Asian Conference on Computer Vision. Tokyo, Japan, volume 2, pages 784-795. Springer, 2007]. Le résultat final de cette première partie est un ensemble de points regroupés par ellipses et labéllisés par le numéro de la vue où ils apparaissent. Notons que ce calcul est effectué pour chacune des caméras du banc de prise de vues.

*Reconstruction métrique de la scène et des caméras*

À partir de la localisation des projections des points 3D dans les différentes vues, on cherche à reconstruire la scène 3D. Par «la scène», on désigne les positions 3D des amers et les paramètres des caméras pour chaque vue (position, orientation et paramètres internes). Pour la tâche de calibrage au sens strict, seuls les paramètres internes des caméras sont nécessaires. Les autres paramètres peuvent être vus comme des produits dérivés du processus, mais leur estimation fine permet d'obtenir des résultats plus précis. Le terme "métrique" signifie ici que la reconstruction est obtenue à une transformation euclidienne près. Cela n'a pas d'influence sur les paramètres internes des caméras, mais en a une sur leur position.

La méthode utilisée pour calibrer individuellement chaque caméra du banc exploite le mouvement particulier de la mire (observé dans une séquence d'images) lorsqu'elle est mise en rotation sur le plateau tournant. La méthode est adaptée de celle proposée par Colombo et al. [Carlo Colombo, Dario Comanducci, and Alberto del Bimbo. Camera calibration with two arbitrary coaxial circles. In Proceedings of ECCV 06, pages [ : 265-276, 2006] pour la reconstruction de surfaces de révolution.

Une surface de révolution est obtenue par la rotation d'une courbe plane autour d'un axe. Les sections d'une telle surface par un plan perpendiculaire à l'axe de rotation sont des cercles. La configuration de calibrage que nous exploitons ne fait pas intervenir de surface de révolution, mais un mouvement de rotation autour d'un seul axe (ou Single Axis Motion, SAM). Un point fixe de l'objet en rotation (ici les centres des sphères de la mire 3D) se déplace le long d'une section d'une surface de révolution virtuelle. Ainsi les deux problèmes, reconstruction de surface de révolutions et reconstruction de la structure d'un objet en rotation autour d'un axe peuvent être traités de manière similaire. Deux différences pratiques existent cependant entre les deux problèmes :

- la détection des sections circulaires est plus simple dans le cas du mouvement de rotation que dans le cas d'une surface, où ces sections sont en grande partie occultées.
- dans le cas du mouvement de rotation, il n'y a ni silhouette ni méridiens. Ces entités ont des propriétés qui peuvent être exploitables pour la reconstruction [Carlo Colombo. Alberto Del Bimbo, and Federico Pernici. Metric 3d reconstruction and texture acquisition of surfaces of révolution from a single uncalibrated view. IEEE Transactions on Pattern Analysis and Machine intelligence, 27(1) :99-114, 2005].

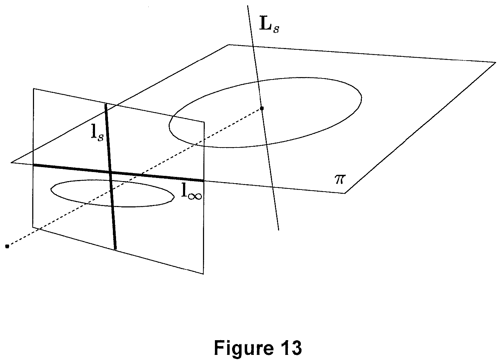

La méthode présentée ici à titre d'exemple s'appuie sur la détermination dans les images d'un certain nombre d'invariants du mouvement, plus particulièrement l'image Is de l'axe de rotation et l'image I∞ de la ligne à l'infini commune à tous les plans perpendiculaires à l'axe de rotation [Andrew W. Fitzgibbon, Geoff Cross, and Andrew Zisserman. Automatic 3d model construction for turn-table sequences. pages 155-170, 1998]. La figure 13 illustre ces différents éléments. Un point 3D en mouvement autour de l'axe Ls suit une trajectoire circulaire dans un plan π. Dans l'image, la ligne de fuite I∞ de ce plan et la projection Is de l'axe de rotation sont invariantes.

Pour le calcul des paramètres de la caméra, la technique utilisée est celle de l'état de l'art : estimation au maximum de vraisemblance des différents paramètres du problème : position 3D des sphères, paramètres internes (dont distorsions optiques) et externes des caméras.

La résolution des équations utilise l'algorithme de Levenberg-Marquart.

*Détermination du facteur d'échelle métrique.*

La reconstruction 3D des positions des sphères et des caméras est obtenue (comme décrit ici selon la méthode du maximum de vraisemblance) à facteur d'échelle près. Pour obtenir une reconstruction métrique, la connaissance de dimensions métriques réelles sur la mire est exploitée. Ces dimensions peuvent être, par exemple, la distance entre les centres des sphères ou le diamètre des sphères. Une simple règle de 3, entre ces dimensions et les positions 3D (non métriques) des sphères retrouvées par la reconstruction permettent d'obtenir le facteur d'échelle global de la scène. En appliquant ce facteur d'échelle aux positions des caméras, on obtient le calibrage métrique désiré.

*Contraintes sur l'image de la conique absolue*

La conique absolue $\Omega_\infty$ est une conique du plan à l'infini et son image, notée w, permet d'obtenir les paramètres internes de la caméra.

L'image de la conique absolue $w = K^T K^{-1}$ ne dépend que des paramètres internes de la caméra. La connaissance de w permet donc d'obtenir K par décomposition de Cholesky. Pour estimer w, nous utilisons des contraintes fournies par les entités fixes du mouvement présentées plus haut.

On utilise de première part des contraintes fournies par les images des points cycliques : les contraintes sont obtenues en exploitant les propriétés de la conique absolue $\Omega_\infty$ et des cercles. Le plan support $\pi$ d'un cercle intersecte le plan à l'infini $\pi_\infty$ en une ligne $L_\infty$. Cette ligne intersecte la conique absolue $\Omega_\infty$ en 2 points qui sont les points cycliques du plan $\pi$.

On utilise de seconde part une contrainte fournie par l'image de l'axe de rotation.

Colombo et al. [Carlo Colombo, Dario Comanducci, and Alberto del Bimbo. Camera calibration with two arbitrary coaxial circles. In Proceedings of ECCV 06, pages [ : 265-276, 2006] montrent que parmi ces quatre contraintes, seules trois sont linéairement indépendantes. Ainsi une paire de trajectoires circulaires permet d'obtenir 3 contraintes sur w, ce qui permet de calibrer la caméra en supposant des pixels carrés (ce qui est généralement le cas pour la plupart caméras modernes).

*Resection des caméras et triangulation des amers 3D*

A cette étape une estimation des paramètres de calibrage des caméras est obtenue. Pour pouvoir poursuivre, il faut obtenir les positions et orientations des caméras (un calcul appelé resection) et les positions des amers 3D (un calcul appelé triangulation).

Une fois les caméras calibrées et les plans $\pi_K$ reconstruit de manière métrique, il est possible de déterminer la position 3D de tous les centres des sphères. Ce calcul est réalisés pour les positions extraites de la premières image, pour laquelle le repère mire coïncide avec le repère monde.

*Méthode alternative*

Une autre méthode permettant d'obtenir une reconstruction approximative des caméras et de la scène est possible. Elle repose sur une mesure manuelle approximative des positions des sphères 3D.

*Raffinage de la solution par ajustement de faisceaux*

Il est possible de raffiner la solution obtenue précédemment par la technique d'ajustement de faisceaux décrite ici. À cette étape, on ajoute au modèle de projection le traitement des distorsions radiales. Le problème se pose alors comme la minimisation, aux sens des moindres carrés, d'une fonction objectif non linéaire [B. Triggs, P. McLauchlan, R. Hartley, and A. Fitzgibbon. Bundle adiustment - a modem synthesis. In B. Triggs, A. Zisserman, and R. Szeliski, editors, Vision Algorithms : Theory and Practice, volume 1883 of Lecture Notes in Computer Science, pages 298-372. Springer-Verlag, 2000].

L'ajustement de faisceaux consiste à trouver les paramètres des caméras, ainsi que les positions des points 3D (la «scène») qui minimisent l'erreur de reprojection de ces points 3D.

**Phase II. Reconstruction 3D**

L'acquisition de modèles 3D d'objets réfléchissants et/ou transparents (les lunettes dans le présent exemple non limitatif de mise en œuvre) est problème de recherche encore non-résolu. En effet, les scanners 3D et les approches par lumière structurée permettent de gérer uniquement des objets Lambertiens. Des approches exploitant des cameras infrarouges ont été récemment proposées [8] et [9]. Néanmoins, ces techniques restent expérimentales, coûteuses et difficiles à mettre en œuvre à une échelle industrielle.

Le système proposé exploite une approche originale qui permet de numériser des lunettes 500 totalement ou partiellement transparentes et/ou réfléchissantes tout en s'affranchissant des limitations inhérentes aux systèmes classiques d'acquisition 3D (par exemple scanner 3D). La nouvelle approche proposée combine une approche de reconstruction par silhouettes 2D, avec des approches constructives des parties transparentes /réfléchissantes (par exemple :

verres et plaquettes). Les lunettes 500 sont donc reconstruites en 3D à partir de silhouettes 2D issues d'un détourage des images acquises lors des prises de vues.

Les principales étapes du processus de reconstruction 3D sont :

1. Détourage des prises de vues (cf. Section "Acquisition d'images 2D de qualité pour la reconstruction et la visualisation") afin de calculer un ensemble de silhouettes 2D des lunettes 500 à reconstruire.

2. Les silhouettes obtenues sont ensuite exploitées afin de calculer une représentation volumétrique des lunettes 500.

3. Un algorithme d'extraction de surfaces est ensuite appliqué afin de calculer une représentation surfacique (i.e. maillage 3D surfacique) des lunettes 500 plus adaptées au rendu.

4. Le maillage surfacique 3D des lunettes 500 est enfin lissé et simplifié afin de générer une représentation à la fois compacte et fidèle à la géométrie des lunettes 500.

**II.A.** Acquisition des silhouettes par détourage

L'ensemble ou une partie des images des lunettes 500 sont détourées par des méthodes automatiques ou manuelles comme détaillé dans la partie Acquisition des silhouettes par détourage de la présente demande. Le système présenté ici est innovant par rapport aux méthodes traditionnelles puisqu'il utilise un fond rétro-éclairé neutre pour séparer l'objet du fond dans les images. Le système permet de capturer une image dans laquelle seul le fond est entièrement saturé, ce qui rend sa détection immédiate. Contrairement aux approches utilisant un fond vert, cette approche est plus simple à mettre en œuvre et n'introduit pas d'éclairage parasite dans la scène (les fonds colorés renvoient une lumière teintée sur l'objet).

Etape 104 Détourage automatique

Le détourage d'objets dans une image 2D est un problème classique et plusieurs approches plus ou moins sophistiquées ont été développées afin de l'adresser. Dans la littérature, ce problème est souvent formuler comme un problème de segmentation en deux classe: (1) le fond et (2) le premier plan. Une étude des principale méthodes est présentée dans [10] et [11].

Etant donné le nombre important d'images à détourer par lunettes 500 nous avons opté pour une approche automatique, simple et rapide qui utilise un seuillage dans l'espace RGB afin de séparer les lunettes 500 du fond.

- Hypothèse: le fond est prépondérant dans l'image et a une couleur proche du blanc
- L'algorithme procède comme suit:

  - calcul de l'histogramme
  - détermination de la couleur C0 la plus probable et qui ressemble a du blanc (i.e., $\|C0\text{-Blanc}\| > R0$)
  - on considère comme fond tous les pixels qui ont une couleur proche de C0 (i.e., $\|C\text{-}C0\| < R$)
  - Les paramètres R et R0 sont définis expérimentalement

Etape 105 Détourage manuel

Etant donné le caractère transparent et réfléchissant des lunettes 500, des cas ambigus difficiles à traiter de façon automatique sont possibles. Ces cas particuliers sont gérés grâce une étape de détourage manuelle ou semi-automatique.

Etape 106 Bouchage des trous et corrections

Une étape optionnelle de raffinement du détourage exploitant le modèle surfacique obtenu peut être appliquée afin de corriger des erreurs de détourage. Ici, plusieurs solutions sont combinées:

- Détourage manuel des vues 2D.
- Détourage manuel du volume 3D généré par l'algorithme de Visual Hull.
- Bouchage des trous obtenus suite a des erreurs de détourage par une approche semi-automatique qui consiste à projeter des objets 3D (définis par l'utilisateur) sur un sous ensemble des vues 2D.
- Détourage automatique ou semi-automatique des vues 2D par reprojection des vues jugées comme correctes sur les autres vues en exploitant le modèle 3D et les paramètres de caméra.

**II.B.** Reconstruction du volume 3D

Etape 107 Visual Hull (figure 3)

- Algorithme décrit dans [1]
- Les lunettes 500 sont représentées par un volume plein
- Le volume est sculpté en exploitant les silhouettes des lunettes 500:

  o Chaque voxel est projeté sur toutes les vues
  o Si la projection du voxel correspond a un pixel du fond sur au moins une vue, le pixel est considéré comme non-appartenant aux lunettes 500.

Etape 108 Marching Cubes (figure 4)

- Algorithme décrit dans [2]
Objectif: convertir une surface implicite représentée par un volume en un maillage surfacique triangulaire
- L'algorithme triangle chaque voxel selon les configurations définies dans de la figure 4.

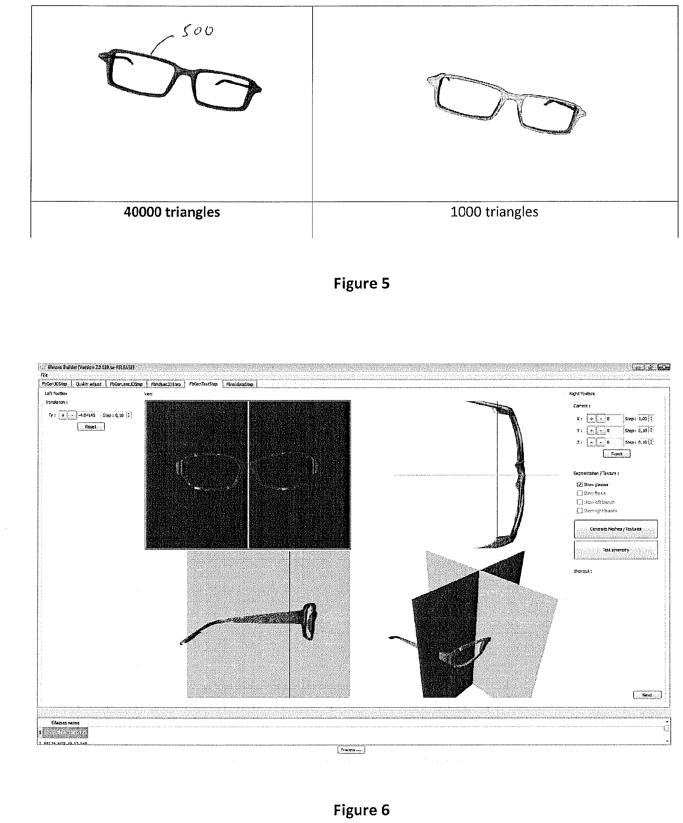

**II.C.** Simplification et lissage (figure 5)

But : obtenir les modèles les plus réguliers et légers.
Les maillages obtenus par Marching Cubes sont volumineux et ont un aspect voxelisé. Afin d'adresser ces deux limitations inhérentes au processus de reconstruction par Marching Cubes, nous appliquons de façon itérative deux étapes de simplification et de lissage.

1. Etape 109 Simplification

- Algorithme décrit dans [3]
- Exploiter des opérations de contraction d'arrête afin de décimer le maillage
- La séquence d'opérations de simplification a appliquer est choisie afin de minimiser a chaque étape l'erreur quadratique moyenne.

2. Lissage

Nous proposons une nouvelle approche de lissage spécifiquement adaptée à des objets manufacturés présentant des courbures constantes par morceau. L'idée principale consiste à approximer le voisinage de chaque sommet du maillage par une surface paramétrique, ce qui permet de garantir l'obtention d'une surface lisse tout en garantissant une courbure quasi-constante sur chaque patch de surface.
L'algorithme procède comme suit:

- Le maillage est converti en une surface manifold fermée en dupliquant les sommets irréguliers et en fermant les trous
- Une bijection entre le voisinage $V$ de chaque sommet s et le plan est calculée en exploitant l'approche [4]
- Le voisinage $V$ est approximé par une surface paramétrique P0 (i.e. polynôme bivariée d'ordre 2) en minimisant le problème linéaire suivant:

$$P_0 = \underset{P}{argmin} \sum_{i \in V} ||V(u_i, v_i) - P(u_i, v_i)||^2$$

- La nouvelle position du sommet S est calculée comme suit:

$$V(u_S, v_S) \leftarrow P_0(u_S, v_S)$$

**Phase III. Représentation dynamique de l'apparence**

La plupart des matériaux ont une apparence qui dépend de manière complexe de la position des sources lumineuses de la scène et de l'angle sous lequel ils sont observés. Représenter numériquement cette apparence dynamique est un problème complexe que nous abordons par une approche s'appuyant directement sur des prises de vue de l'objet à différents points de vue.

Par rapport à une approche classique consistant à paramétrer des modèles procéduraux de matériaux (par exemple en utilisant des shaders programs), l'approche utilisée dans la présente invention permet la capture automatique de l'apparence réelle de l'objet.

L'approche consiste à créer une texture dynamique paramétrable selon l'angle (2 paramètres) que fait l'axe de visée de la caméra virtuelle par rapport à l'objet. Cette texture dynamique est elle-même modélisée comme combinaison linéaire de plusieurs textures calculées à partir des vues sources, par exemple en utilisant la technique d'analyse en composantes principales (étape 117).

En d'autres termes, le procédé d'analyse des images acquises aux différents angles permet de texturer le modèle 3D. Cette représentation contient l'ensemble de la dynamique de la matière (réflexions diffuse, spéculaire) ainsi que des détails géométriques non représentés dans le modèle géométrique de l'objet.

Cette technique présente trois avantages majeurs :

1. En classant les différentes textures composant la texture dynamique par ordre décroissant d'influence sur l'apparence finale, il est possible de choisir le compromis en fonction de l'application cible entre la qualité de reconstruction de l'apparence et le volume de données nécessaire.

2. Cette technique permet également de transmettre de façon progressive (streaming) le contenu numérique, ce qui permet une visualisation rapide, même à bas débit.

3. L'approche permet de séparer les effets lumineux (spécularités) pour les accentuer ou les supprimer.

**III.A.** Construction de la texture dynamique

La construction de la texture dynamique s'appuie sur une approximation linéaire de l'apparence de l'objet. Afin de combiner l'apparence capturée en chaque vue, un paramétrage 2D du maillage est calculé (par exemple en utilisant la méthode de [14]). Ainsi, on obtient pour chaque vue de l'objet une texture $T_i \in \Omega \mapsto \mathbb{R}^3$, avec $\Omega \subset \mathbb{Z}^2$ le domaine de définition de la texture, ajustable en fonction du poids et de la qualité souhaitée (par exemple $\Omega = [\![0,511]\!] \times [\![0,511]\!]$ ). La représentation utilisant la suite de texture $T_i$ est extrêmement gourmande en stockage. Pour réduire la quantité d'information en conservant une qualité de reconstruction de l'apparence acceptable, une base de textures $\mathcal{B} = \{M\} \cup \{S_j, j = 1, \dots, N_r\}$ est construite avec $N_r \ll N$. Chaque texture $T_i$ est alors projetée dans la base :

$$T_i = M + \sum_{j=1}^{N_r} \lambda_j S_j$$

La base de textures $\mathcal{B}$ peut par exemple être construite par Analyse en Composantes Principales ("ACP") de l'ensemble des vecteurs $\{t_i\}$, où $t_i$ est la représentation vectorielle (« en colonne ») de la texture $T_i$.

Le modèle d'apparence comprend donc :

1. La base de texture B

2. Un ensemble de couples (aj,bj) utilisés pour la quantification des textures Sj.

3. Une matrice $\Lambda = \begin{bmatrix} \lambda_1^1 & \cdots & \lambda_1^N \\ \vdots & \ddots & \vdots \\ \lambda_{N_r}^1 & \cdots & \lambda_{N_r}^N \end{bmatrix}$ comprenant les coefficients de la combinaison linéaire permettant de reconstruire une approximation de chaque texture Ti. Chaque texture Ti et par extension chaque vecteur $(\lambda_1^i, \dots, \lambda_{N_r}^i)$ sont associés à un point de vue caractérisé par deux angles ($\Theta_j$, $\Phi_j$).

**III.B.** Rendu

Le rendu de l'objet est adapté à l'angle de vue courant $(\Theta, \Phi)$ en calcul un vecteur $(\lambda_1, ..., \lambda_{N_r})$. Cela revient à

$$m: \begin{array}{ccc} \mathbb{R}^2 & \longmapsto & \mathbb{R}^{N_r} \\ (\Theta, \phi) & \longrightarrow & (\lambda_1, ..., \lambda_{N_r}) \end{array}$$

définir une fonction dont les valeurs en les points $(\Theta_j, \Phi_j)$ sont connues. Le problème du calcul de la valeur $m(\Theta, \Phi)$ est donc un simple problème d'interpolation (ou d'approximation) de fonction qui peut être résolu par n'importe quelle méthode de l'art. Nous utilisons une méthode précalculant les valeurs de la fonction m sur une grille régulière du domaine de définition des angles $(\Theta, \Phi)$. Cette méthode consiste à résoudre de manière discrète l'équation différentielle $\Delta m = 0$ ($\Delta$·est l'opérateur Laplacien). Ensuite la valeur $m(\Theta, \Phi)$ est calculée par interpolation bilinéaire entre les quatre valeurs les plus proche de $(\Theta, \Phi)$ sur la grille.

Une fois le vecteur $(\lambda_1, ..., \lambda_{N_r}) = m(\Theta, \Phi)$ correspondant à la vue courante déterminée, la texture associée à la vue courante $T = M + \sum_{j=1}^{N_r} \lambda_j S_j$ est calculée et plaquée sur le maillage 3D.

**Phase IV. Analyse et amélioration**

Le modèle 3D reconstruit, une fois texturé, peut subir un certain nombre de post-traitements :

- Recalage 3D (c'est-à-dire, le modèle est repositionné dans l'espace en lui appliquant des translations / rotations 3D).
- Déformations non rigides comme par exemple une déformation des branches d'une paire de lunettes 500 visant à rendre la branche de droite et la branche de gauche symétriques.
- Insertions / remplacements d'éléments 3D comme par exemple l'insertion de verres à une lunette reconstruite sans les verres ou le remplacement des plaquettes.

Ces traitements peuvent êtres effectués manuellement ou semi-automatiquement.

**IV.A.** Géométrique

Etape 111 Alignement

Objectif: s'assurer que les lunettes 500 sont bien alignées avec les axes du repère utilisé pour la reconstruction.
Deux approches sont considérées :

- Approche semi-automatique : l'utilisateur corrige la pose en appliquant des rotations/translations locales,
- Approche automatique : utilisation d'une méthode d'analyse statistique (par exemple l'ACP) pour le calcul du repère propre.

Etape 112 Segmentation 3D

La segmentation d'objets 3D, ayant pur but de segmenter les lunettes 500 en une monture et deux branches, est un problème de recherche encore actif et plusieurs approches ont été développées dans la littérature [12]. Le système proposé exploite une approche semi-automatique (illustrée en Figure 6) qui tient compte de la structure géométrique des lunettes 500 :

    o l'utilisateur définit la profondeur d'un premier plan qui sépare la paire de lunettes 500 en une monture et deux branches
    o Les branches sont ensuite séparées en détectant le plan de symétrie.

Dans une variante, la segmentation est faite par apprentissage automatique sur quelques dizaines de paires de lunettes (par exemple une cinquantaine), en utilisant des techniques connues en soi.

Etape 113 Symétrisation 3D

La symétrisation d'objets 3D est une problématique relativement récente [13]. Le système proposé exploite une approche originale qui permet de symétriser les branches des lunettes 500 tout en préservant les détails. La technique exploite une procédure d'extraction de squelette afin de mettre en correspondance les points des deux branches. Ensuite, un champ de déformation lisse est calculé afin de déformer une branche pour quelle épouse la forme symétrique de l'autre branche.

a) Extraction de squelette

- Le squelette de chaque branche est calculé comme suit:

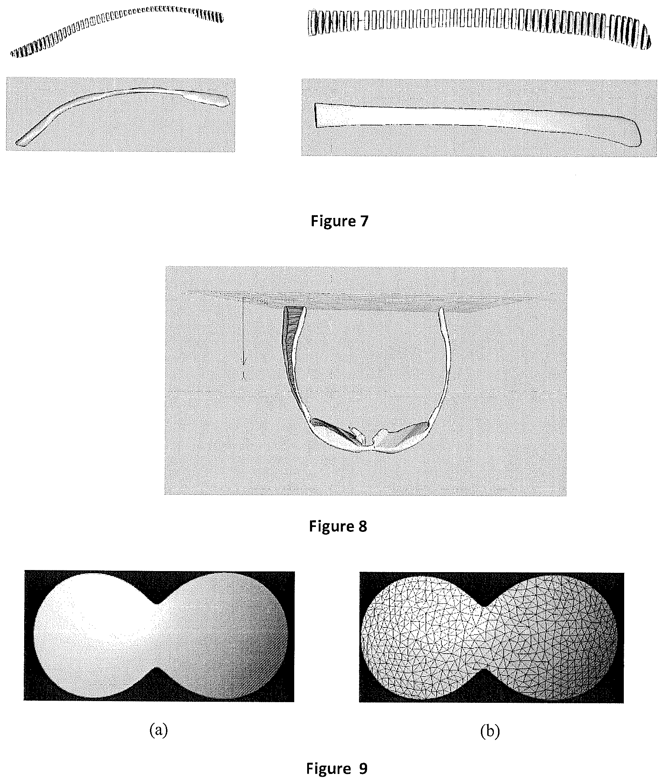

    o La branche est transformée dans sont repère propre en exploitant une analyse en composantes principales,
    o La lunette est décomposée en tranches selon la dimension de plus grande variabilité (figure 7),
    o La courbe de squelette est obtenue en reliant les barycentres de tranches obtenues dans l'étape précédente.

b) Déformation des branches

- Déformer les branches des lunettes 500 afin d'obtenir une surface symétrique
- L'algorithme procède comme suit:

    ◦ Les courbes de squelettes associées aux deux branches sont paramétrées par longueur d'arc et une bijection entre les deux courbes est calculée en exploitant cette paramétrisation,
    o Les sommets de chaque branche sont associés aux points le plus proche sur chaque courbe,
    o Un champ de formation est généré en calculant les différences entre les positons des points de la courbe de squelette la branche droite et la courbe obtenue par symétrie selon le plan (O, Y, Z) de la courbe de squelette de la branche gauche,
    o Les sommets de la branche gauche sont déplacés en exploitant le champ de déformation obtenu dans l'étape précédente (figure 8),
    o Afin d'éviter des problèmes de discontinuité, le champs de déformation est pondéré selon la distance du sommet par rapport a charnière de la branche.

Etape 114 Génération des verres et intégration de parties 3D dans l'objet reconstruit
Afin de reconstruire les verres, une approche semi-automatique qui exploite comme entrée une courbe 3D est appliquée. Le contour est obtenu en calculant par exemple le chemin le plus court sur la surface de la monture de lunettes 500 qui lie des points sélectionnés par l'utilisateur. Dans le cas de lunettes 500 sans cadre (i.e., rimless), l'utilisateur définit le contour en 2D. Ce contour est ensuite positionné en 3D en exploitant les paramètres des caméras calculés dans la section relative au calibrage de la machine. L'utilisateur ajuste la profondeur des verres grâce à une interface graphique dédiée.
L'algorithme de reconstruction des verres permet d'approximer le contour 3D par une surface paramétrique de courbure constante. La surface est enfin triangulée par la méthode de Delaunay. La qualité de la triangulation est améliorée grâce à deux étapes de subdivision et de simplification.

a) Approximation par surfaces paramétriques

- L'utilisateur clique un ensemble de points sur le cadre des lunettes 500 afin de définir un verre
- Le chemin le plus court entre ces points est calculé
- La courbe C est transformée dans son repère propre en exploitant une ACP
- Des coordonnées paramétriques sont associées aux points du contour en les projetant sur le plan de plus grande variabilité
- Un polynôme d'ordre deux et de courbures principales constantes est calculé comme suit (figure 9 (a)) :

$$P_0 = \underset{P}{argmin} \sum_{i \in C} ||C(u_i, v_i) - P(u_i, v_i)||^2$$

b) Triangulation du contour

- Le contour est triangulé en exploitant une triangulation de Delaunay décrite dans [6],
- Le maillage obtenu est subdivisé comme décrit dans [7],
- Les positions des sommets insérés sont obtenues en exploitant le polynôme P0 calculé dans la section précédente,
- Le maillage obtenu est enfin simplifié en exploitant l'algorithme décrit dans la section Simplification (figure 9 (b)).

IV.B. Apparence

Le système comporte un ensemble de post-traitements des données produites permettant de modifier l'apparence de l'objet. Ces modifications permettent la production rapide de plusieurs objets similaires par leur géométrie générale, mais différent par leur apparence (matières et/ou couleurs différentes, présence absence de détail de surface, etc.). Cette technique est particulièrement intéressante pour les montures de lunettes, de nombreuses gammes étant conçu comme des variations de matières / couleur d'une même paire.

La technique de représentation de l'apparence par une combinaison de texture permet :

- de modifier (accentuer/diminuer) certains effets lumineux, en modifiant les poids associer à chaque texture dans la texture combinée
- de corriger des régions entières de l'objet pour par exemple en modifier la colorimétrie ou la luminance.

La modélisation indépendante des verres de manière paramétrique également de changer leur apparence (taux de transparence, taux de réflectivité, teinte, etc.). Lorsque deux paires de lunettes 500 se distinguent par l'apparence du verre, la production des deux modèles numériques se ramène à un simple ajustement des paramètres.

**Variante de mise en œuvre**

Dans une variante représentant une évolution du procédé de reconstruction d'objet virtuel (notamment lunettes), celui-ci comporte les étapes suivantes :

1. Calibrage (étapes 103)

   a. Pour une machine donnée

      i. Calibrage géométrique

         1. Prise de vues d'une mire de calibrage
         2. Calibrage de l'ensemble des caméras pour les positions du support considérées.

      ii. Calibrage colorimétrique

         1. Prise de vue d'une mire colorimétrique
         2. Estimation du profil des caméras.

2. Acquisition (étape 101)

   a. Pour une machine donnée

      i. Acquisition des fonds
      ii. Acquisition du support, vues matière

   b. Par objet

      i. Acquisition objet : vues matière, vues matting, vue texture avec éclairage spécifique

3. Prétraitement 2D

a. Correction colorimétrique des prises de vue (vues texture obligatoire) (étape 102)
b. Masques matière/fond
c. Masques opacité (matting)
d. Optionnel : Identification 2D support, verres
e. Détection automatique/manuelle par clics, de points spécifiques à l'objet pour le positionnement et la segmentation 3D.

4. Reconstruction 3D

a. Reconstruction 3D support

i. Utilisation des images support et séparation fond/support

b. Reconstruction monture sans verres

i. Par utilisation de vues 2D, avec quelques vues détourées sans support, et sans verre
ii. Optionnel : Par soustraction 3D du support

c. Reconstruction des verres

i. Par déformation d'un verre 3D et projection sur les vues de matting
ii. Par détourage 2D automatique/manuel d'une vue et projection de la silhouette sur la surface du modèle 3D montures+verres.

5. Finalisation géométrique

a. Segmentation en parties (étape 112)
b. Symmétrisation (étape 113)
c. Positionnement automatique destiné à l'utilisation produit. Pour une lunette, positionnement sur un modèle de visage générique.
d. Assemblage géométrique

i. Verres, monture, branches et autres sous-parties segmentées

6. Texturage

a. Texturage en utilisant les objets occultants : support, verres reconstruits

i. Eviter problèmes de réfraction

b. Coloration (Inpainting) des parties non visibles à cause du support

i. Génération de masques support par projection 3D dans les vues désirées, et mélange avec séparation en classes bayesienne par apprentissage de la couleur support.

c. Optionnel : correction manuelle par projection de vues
d. Génération de texture statique et dynamique

7. Mise en matière

a. Des verres

i. A partir de points prédéfinis dans les verres 3D, et par projection de ces points dans les images désirées de texture, échantillonnage des couleurs et réplication de la teinte du verre en fonction de son type : vue, solaire, dégradé, miroir, polarisant,etc.
ii. Réglages subjectifs des reflets et environnement en fonction des besoins de rendu

b. Des montures désirées

i. Segmentation multimatériaux

ii. Transformation des zones désirées de textures en matériaux pour les matériaux dont on possède un modèle physique jugé réaliste. Mise en valeurs des paramètres des modèles physiques en fonction des observations par minimisation entre la synthèse et la reprojection au sens des moindres carrés. Le modèle physique est décidé en fonction du type déclaré du matériau.

Ce procédé est valide pour tous les objets, essayables virtuellement ou non.

**Avantages du procédé**

- Le système (machine et procédé tels que décrits), forme un scanner qui traite les objets multimatériaux et sait en faire un rendu photoréaliste fidèle.
- Il constitue un scanner qui sait traiter les objets transparents par diffraction/réfraction.
- La technique d'analyse et de rendu exposée utilise en complémentarité l'analyse de géométrie et d'apparence : là où la précision de la géométrie s'arrête, l'analyse de la texture prend le relais. Le rendu final tient compte de ces deux aspects, ce qui permet de reproduire en tout point de vue une image extrêmement fidèle de l'objet.
- Le procédé comprend une utilisation originale de motifs de fonds (non projetés comme les bandes/motifs sur les objets mats, et non-environnementaux comme les bandes pour le calcul d'opacité (matting)) pour la reconstruction de matière en vision passive. Méthode semi-active /active inverse par écran de fond.
- De même, le procédé comprend une paramétrisation originale qui permet par un ensemble de points de vue, d'algorithmes et de fonds judicieusement choisis de réduire le temps d'acquisition et permettre un procédé industriel de traitement : [5 fonds contre une 36 pour la technique connue d'environment matting]
- Il permet le positionnement et la segmentation automatiques de l'objet par apprentissage.
- Le procédé met en œuvre une technique de rendu adaptative / scalable (capable de s'étendre en niveau de qualité) qui peut afficher autant d'effets que désiré en fonction des plateformes et capacité graphiques.

**Présentation générale**

Les techniques pour distinguer la matière et analyser la forme 3D s'orientent plus aujourd'hui vers des approches actives : infrarouge, ultraviolet, projection de lumière structurée, qui demandent des systèmes chers et sont dédiés à un seul type de matériaux et de surface. Dans la littérature de reconstruction 3D par lumière active, on utilise des franges ou des motifs structurés, et on regarde comment celles-ci se déforment par rapport à ce qui est attendu dans l'image. Le document Ihrke. I., Kutulakos, K. N.. Lensch, H. P.. Magnor, M.. & Heidrich, W. (2008). State of the art in transparent and specular obiect reconstruction. In EUROGRAPHICS 2008 STAR-STATE OF THE ART REPORT propose une revue complète de toutes les techniques d'analyse et de rendu. La majorité de ces techniques sont longues en temps d'acquisition, et ne traitent qu'un type de matériau ou surface lorsqu'elles font de la reconstruction 3D. Lorsqu'elles sont plus dédiées au rendu d'apparence, elles ne traitent en général qu'un seul point de vue.

Notre procédé résout ces problèmes. Il permet de reconstruire des objets convexes, multimatériaux, et pouvant être troués, grâce à l'utilisation conjointe de techniques d'analyse d'apparence et de reconstruction à partir de plusieurs points de vue. Tous les types de surface sont gérés. Les parties concaves sont traitées dans un deuxième temps par des techniques d'analyse de surface comme la stéréophotométrie, ou les techniques proposées dans la revue citée. Nous pouvons donc reconstruire très précisément et reproduire fidèlement la majorité des objets existants.

Nous proposons d'aborder ces phénomènes en problème inverse, par différence d'un fond attendu sur un écran et ce qui est observé. Nous la nommons approche active inverse. Les fonds peuvent être des lignes, des bandes, des lignes qui se croisent ou des échiquiers, mais aussi des poids ou cercles, car on peut les exprimer de manière géométrique et projective. Plus les fonds contiennent d'information exploitable, moins il est nécessaire de prendre des photos. Les techniques d'analyse auxquelles nous nous référons utilisent en général des fonds structurés et se limitent à un point de vue.

C'est le cas de la technique connue en soi dite d'environment matting [Chuang, Y. Y., Zongker, D. E., Hindorff, J., Curless, B., Salesin, D. H., & Szeliski, R. (2000, July). Environment matting extensions: Towards higher accuracv and real-time capture. In Proceedings of the 27th annual conference on Computer graphics and interactive techniques (pp. 121-130). ACM Press/Addison-Weslev Publishing Co].

C'est également le cas de l'approche stéréo par déplacement de phase [Yamazaki, M.. Iwata, S.. & Xu, G. (2007). Dense 3D reconstruction of specular and transparent obiects using stereo cameras and phase-shift method. Computer Vision-ACCV 2007, 570-579].

Les travaux se rapprochant le plus de notre technique car ils utilisent des volumes et du matting sont ceux de Yamakazi et al. [Yamazaki, S., Mochimaru, M., & Kanade, T. (2006). Inverse volume rendering approach to 3d reconstruction from multiple images. Computer Vision-ACCV 2006, 409-418], qui proposent une approche unifiée dédiée aux objets demandant un calcul d'opacité (matting) pour le mélange du contour, comme la fourrure, ou la chevelure. Pour la reconstruction 3D, nous nous appuyons sur des techniques classiques de reconstruction par silhouette. Un des enjeux principaux est alors d'obtenir ces silhouettes.

## Détourage automatique et reconstruction

Nous distinguons trois aspects qui peuvent donner lieu à plusieurs variantes du procédé : l'analyse matière/fond, la création des masques, et le rendu basé image.

### *Détourage automatique (étape 104) par méthode semi-active inverse*

#### Objectif

L'objectif est de proposer des masques de matière, quel que soit le type et les attributs du matériau, transparent, translucide, réfléchissant, etc. Ces masques sont utilisés pour la reconstruction par silhouette. Ils ne doivent pas comporter de faux négatifs. Par exemple, décider d'un trou alors que c'est de la matière sur une vue va trouer le volume selon un cône de visibilité, et l'erreur est difficile à détecter. Cependant, ces masques peuvent comporter plus de matière que nécessaire, tant qu'ils apportent de l'information sur le contour de l'objet liée au point de vue.

Notre approche consiste à utiliser des fonds connus, et à détecter la matière aux endroits où ce qui est observé est différent de ce qui est attendu. L'approche pour la mise en œuvre est similaire à la technique connue en soi de « blue screen matting » (mesure d'opacité devant un écran bleu). Cependant, le but recherché est différent. Nous cherchons uniquement à effectuer une analyse matière/non matière, sans rechercher l'alpha et la couleur du premier plan (foreground) dans un premier temps.

Une fois l'analyse complète réalisée (masques et 3D), il est possible d'effectuer une analyse d'opacité (matting) sans danger.

#### Problématique et analyse

Nous prenons le cas des lunettes comme exemple le plus complexe, sur des objets considérés rigides au moment de la prise de vue (shooting). Notre technique s'étend à tous les objets, matériaux, et effets lumineux. Les lunettes sont constituées de plusieurs types de matériaux. Ces matériaux ont des attributs photométriques (souvent modélisés en BRDF, BTF) relatifs à leurs propriétés physiques (type et traitements des matériaux) : réfléchissants, comme le métal, non isotropes comme les effets de brossage, absorbants ou fluorescents (subsurface scattering), comme l'acétate, ou le caoutchouc, transparents et occasionnant diffraction et réfraction de la lumière, comme les verres. Ces matériaux interagissent entre eux, lorsqu'ils sont présents sur l'objet, par leurs interactions lumineuses dues à leur proximité.

Lorsqu'on prend en photo un matériau opaque et mat, un fond de couleur différente de l'objet est suffisant pour distinguer le fond de la matière. Si l'on ne connait pas la couleur a priori de l'objet, ou que ce dernier a plusieurs couleurs, plusieurs fonds sont nécessaires. La limite de la séparation matière (foreground) /fond (background) dépend de la capacité à proposer et distinguer dans l'image finale des couleurs qui ne se trouvent pas dans l'objet, ainsi qu'un seuil de séparation de ces deux classes. La décision ne se fait pas sur un seul fond, mais sur les informations recueillies sur l'ensemble des fonds. Pour un objet texturé, le même principe de séparation par couleur peut être appliqué.

Nous distinguons maintenant deux catégories d'effets de l'interaction matière/lumière qui mettent en échec une solution de fonds unis.

1. La réflexion : prenons une matière réfléchissante, comme un métal poli. La couleur observable dans l'image de ce métal contiendra en grande partie l'intégration des rayons de l'environnement lumineux. Aussi, pour une matière orientée de manière plus ou moins rasante par rapport à la caméra, la couleur observée dans l'image de la matière sera très proche de la couleur du fond de détourage.

2. Réfraction/diffraction: prenons le cas du verre. La réfraction pose deux problèmes. Dans le cas d'un fond uni, la diffraction peut altérer la couleur du fond pour certaines vues choisies et permet de le distinguer ; mais ce n'est pas toujours le cas. La réfraction intervient surtout dans le cas des interactions internes à l'objet : une branche de lunette peut être visible à travers le verre, mais être vue à un endroit faux géométriquement (loi de Fresnel). Le masque va créer de la matière et des trous à des endroits erronés.

**Approche**

Seul le critère de différence colorimétrique est utilisé dans l'analyse, puisque notre technique s'appuie sur l'analyse des photographies. Nous n'imposons pas de contrainte géométrique ou de voisinage comme dans la segmentation (approches variationnelles ou par graphe), car ces dernière imposent des contraintes sur la forme. Or les silhouettes doivent être le plus précises possibles, et ont souvent des discontinuités imprévisibles sur les contours, propres à l'objet : chanfreins, trous, transparence, filigranes et cisèlements doivent être fidèles lors du rendu.

Nous déduisons des contraintes identifiées les attributs géométriques et colorimétriques des fonds proposés :

1. Réflexions : les réflexions de l'objet ont un caractère additif sur l'image, puisqu'elles intègrent un ensemble de rayons issus de l'environnement. Si nous contrôlons l'environnement avec une couleur et une chaleur constante d'éclairage, et proposons plusieurs couleurs additives entre elles dans le fond, à une position adéquate, il est alors possible de distinguer la réflexion sur l'objet du fond lui-même, car les lieux de réflexions auront une couleur différente de ce qui est attendu sur l'image.

2. Réfraction : le choix de distinguer la matière quelle que soient ses attributs évite intrinsèquement les problèmes de diffraction interne à l'objet. Dans l'exemple de la branche vue à travers le verre, le verre comme la branche étant considérés comme matière, aucun trou erroné ne peut être créé. Prenons maintenant le cas du verre seul : par son indice de réfraction, les rayons lumineux partant du fond et passant par le verre sont déviés. Si nous considérons le problème selon une dimension, avec un fond à bandes de couleurs différents, il est possible de distinguer la matière par différence de couleurs diffractées selon la direction perpendiculaire. La taille distinguable des bandes de matière retrouvées est de la taille de largeur des bandes visibles depuis la camera dans le plan de l'objet à distinguer. Si l'on intéresse aux deux dimensions prépondérantes, depuis un point de vue, alors on peut avoir plusieurs motifs de fonds à bandes selon plusieurs axes, et selon plusieurs fréquences. Ces fonds deviennent alors des filtres, et l'on peut jouer sur la fréquence, l'orientation (Fourier), mais aussi la phase (Ondelettes) et la couleur. Il est possible de combiner ces fonds en des motifs maîtrisés, comme un échiquier, ou des fonds aléatoires colorés. La contrainte de différence de couleur visible à l'image est importante, puisque le pixel associé à un rayon diffracté devra être représenté par une couleur suffisamment différente de celle attendue. Enfin, les phénomènes de diffraction et réfraction pouvant s'ajouter en tout point de l'image, plusieurs instances numériques des paramètres identifiés doivent être présentes. Aussi, les couleurs conjointes de zones identifiées du fond (carrés de l'échiquier, ou pixels d'une région d'un fond arbitraire) doivent être suffisamment différentes pour être distinguables. Les plaquettes des lunettes, par exemple, combinent beaucoup d'effets dus à l'interaction lumineuse, car elles sont translucides et de forme arrondie et petites par rapport à la scène. Elles ont donc des interactions complexes.

**Algorithme**

Le procédé suppose l'utilisation de fonds connus. Ces fonds peuvent être explicitement appris par des captures, ou reconstruits par combinaison de vues s'il y a un objet occultant, comme le support de l'objet.

L'algorithme de détourage automatique est le suivant :

Entrées :

- images des fonds pris par les cameras pour un point de vue: *img_bg(fond/vue)*
- images de l'objet sous un angle donné pour les divers fonds considérés *img_mat(fond/vue)*

Sortie :

- le masque binaire de décision matière/fond : *GlassesMaskF(vue)*

Pour une image donnée, représentant un point de vue, c'est-à-dire un couple d'angles : *theta, phi* visant l'objet à une distance donnée :

1. Mesure du bruit du capteur *ndgTresh* sur des zones connues de l'image et considérées comme ne contenant pas de matière :

$$ndgTresh(fond/vue) = \sum_{\text{pixels de la zone d'echantillonnage}} \|img\_mat - img\_bg\|_2^2$$

*avec* $\left\| \quad \right\|_2^2$ *la norme 2 au carré sur l'ensemble des canaux r,g,b.*

Le seuil utilisé ici représente le bruit de fond dû aux imprécisions mécaniques et physiques des différents éléments constituants de la machine : écran d'affichage des fonds, compression des images, vibrations du système et des appareils de prise de vue, etc. Ce seuil peut être évalué sur un ensemble d'images lors de la prise de vues sous différents angles avec ce même principe, la zone d'échantillonnage considérée étant connue sur les images choisies.

2. Pour chacun des fonds

a. Création de l'image de différence

pour un pixel de position (i,j), de l'image :

$$difMask(i,j) = \sum_{r,g,b} \left\| img_{mat(i,j)} - img_{bg(i,j)} \right\|_2^2$$

b. Séparation en classes : 1 pour matière, premier plan (foreground), 0 pour non matière, arrière-plan (background).

*Si difMask(i,j)>ndgTresh, GlassesMask(vue,fond) (ij)=1; sinon difMask(i,j)=0;*

c. Traitement pour enlever le bruit éventuel par traitement d'images. On peut observer un bruit de type sel sur le fond. On peut l'enlever par des techniques simples de traitement d'images, comme l'ouverture. Cette étape n'est pas indispensable.

3. Union des masques

*GlassesMaskU=union_(fonds/vue){difMask(fond/vue)}*

Si les vues sont bien choisies, alors le masque est complet, c'est-à-dire qu'il ne contient pas de trou non désiré. La technique proposée ici à titre non limitatif défend un choix judicieux de vues, qui favorise les effets de réfraction et diffraction et permet une séparation des classes aisée. Si l'étendue des vues n'est pas spécifiée, il est possible d'obtenir un masque qui peut contenir des trous ou de la neige (matière en moins ou en trop). Nous pouvons utiliser alors deux techniques complémentaires :

4.a : Bouchage des trous (étape 106) par traitement d'images

Des techniques comme la fermeture permettent de repérer et boucher les trous de taille connue. Leur précision est de l'ordre de la taille de l'élément structurant, qui est calibré pour être de la taille de l'élément constitutif du fond visible depuis la caméra.

4.b : Création d'un masque des composantes connexes principales. Chaque vue est informative d'un aspect de l'enveloppe 3D de l'objet. Aussi, nous proposons la technique suivante : le masque de matière est une composante unique. Dans le cas d'une lunette, support, verres, et montures sont vues comme un seul objet à ce stade. Le masque final *GlassesMaskF* est une image blanche, à laquelle nous retirons les m plus grandes régions considérées comme fond dans l'image *GlassesMaskU.* L'image obtenue n'est pas le masque complet, puisqu'il peut contenir plus de matière que nécessaire. Cependant, la silhouette proposée dans l'image est très précise car non altérée par des post-traitements. En général, le nombre de vues de l'objet est suffisant pour que toutes les parties soient observées, et m=2 régions suffit. Ainsi, toutes les zones potentiellement trouées ne sont pas sélectionnées ni ajoutées dans le masque final *GlassesMaskF.* Des techniques d'analyse de cohérence de région peuvent permettre de séparer les trous non désirés de ceux représentatifs de la géométrie, et de proposer un classement plus fin. Ces trous sont en effet modélisables par leur structure particulière qui est corrélée au fond utilisé.

**Mise en œuvre : fonds utilisés**

Nous proposons d'utiliser un écran visible de l'ensemble des caméras. En pratique un seul écran suffit. Cet écran est contrôlé par l'ordinateur et synchronisé avec les prises de vues. En pratique, dans la machine, la prise de vue se fait selon la séquence suivante :

1. Par machine (lumière ambiante, position et réglage des caméras), ou session de prise de vues :

a. Calibrage géométrique (étape 103)
b. Calibrage colorimétrique (étape 102)

c. Apprentissage des fonds

    i. Sans l'objet : prise de vue des fonds seuls
    ii. Avec objet occultant, comme le support

2. Acquisition de l'objet (étape 102)

a. Positionnement de l'objet sur le support
b. Pour un ensemble de vues demandées= couples (camera, angle plateau tournant) :

    i. Positionnement de l'objet automatique dans la position voulue
    ii. Pour l'ensemble des fonds considérés

        1. Affichage du fond
        2. Prise de vue pour les cameras désirées
        3. Transfert des données. Ce transfert peut être fait en parallèle.

Les fonds sont paramétrés par le motif, la couleur, la fréquence, et la phase :

- Motif: afin de gérer les deux dimensions possibles dans l'écran d'affichage situé derrière l'objet, les fonds sont constitués de carrés. Le fond est dit échiquier quand la succession des couleurs est maîtrisée selon un pattern prédéfini. Sinon, on considère le fond aléatoire. Pour l'échiquier on décide d'un motif (pattern) qui sera répété sur une surface de fond. Un motif (pattern) est un rectangle de n carrés de couleurs différentes.
- Couleur :

    ◦ Choix : le choix des couleurs est fait pour maximiser la différence avec les couleurs de l'objet attendu. On prend de préférence des couleurs saturées, car l'affichage sur l'écran de prise de vue et l'environnement lumineux les désaturent naturellement. Ainsi, si l'on considère le gris comme étant une couleur désaturée, on prendra de préférence des couleurs loin de cette valeur, soit : rouge, vert, bleu, magenta, cyan, jaune, blanc, noir.
    ◦ Agencement : on veut maximiser la distance entre les valeurs de couleur. On désire obtenir un effet contrasté afin de minimiser la désaturation et le mélange pendant la prise de vue. Un carré vert agencé à côté d'un carré cyan peut être vu comme un rectangle de couleur mélangée.

- Fréquence : la fréquence spatiale du fond se définit par la taille de ses carrés constituants. Plus les carrés sont petits, plus la précision est importante. En effet, si on ne possède qu'un fond, et que le carré est de même couleur que la matière, alors cette partie sera considérée comme un trou. L'erreur maximale est donc de la taille d'un carré, tel qu'il est perçu par la caméra. En pratique, il y a un compromis entre la taille du carré, la capacité d'affichage de l'écran, et la capacité de mise au point des caméras.
- Phase : le positionnement de l'objet à détourer peut se trouver dans un cas particulier de mélange dans l'image dû à la digitalisation (imprécisions d'affichage, de prise de vue et compression). Un déplacement spatial du fond permet de s'affranchir de tels problèmes.

Les fonds doivent respecter ces règles d'un point de vue spatial, mais aussi temporel. Nous proposons donc plusieurs fonds associés qui permettent une complétude dans l'analyse de la matière, quelle que soit la matière de l'objet et la multiplicité de ses couleurs.

A partir d'un ensemble de règles donnant des valeurs aux paramètres ci-dessus (motif, couleur, fréquence, phase), un premier fond de la taille de la résolution de l'écran d'affichage est créé. Un ensemble de fonds complémentaires définis par rapport à ce fond original sont ensuite générés selon les règles suivantes :

- Complémentarité des couleurs : on crée le fond complémentaire par inversion de la couleur autour de la couleur neutre, telle que perçue dans l'image. On paramètre l'ensemble de la machine de prise de vue pour n'être pas trop loin de cette proposition. En théorie, toute valeur peut être prise. Pour un point donné de l'espace RGB, si on considère la couleur neutre $cN$ comme étant le point de symétrie, alors pour une valeur de couleur $cI$ dont on veut prendre la couleur complémentaire, on propose la nouvelle valeur $cI'= cN+vec(cI-CN)$. Ainsi, pour une valeur neutre $cN= (127,127,127)$, et que la couleur du carré considéré est de couleur $cI=(0, 0, 255)$, alors son opposé d'égale distance euclidienne autour du point neutre sera $cI'=(255, 255, 0)$. Ainsi, on assure, si on possède aux moins deux fonds, que l'on a une distance minimum d'au moins 127 niveaux de gris entre la couleur inconnue de la matière et le fond. En pratique, les couleurs étant désaturées lors de la prise de vue, cette échelle est réduite, mais la distance reste très grande pour les besoins.

- Déphasage : on propose des déphasages de la taille d'un carré en x et en y, afin de garantir un résultat si des effets de réfraction et de couleurs proches se combinent. De même, un fond décalé d'une demi-taille de carré est proposé dans le jeu pour enlever toute ambiguïté due à une mauvaise contingence de positionnement de l'objet et du fond et mélange des couleurs.

- Fréquence: plusieurs tailles sont proposées pour alterner entre les effets bénéfiques d'un fréquence haute (petits carrés) qui gère très bien les phénomènes de réfraction et réflexion, mais désature beaucoup et favorise les mélanges de couleurs non désirés, et des fréquences basses (grands carrés) qui gèrent très bien les parties opaques de l'objet grâce à des grandes plages de valeurs stables de couleurs. Les parties translucides sont gérées tantôt par l'une et par l'autre de ces approches selon qu'elles intègrent ou non des effets de réfraction, diffraction, réflexions de la lumière.

En théorie plusieurs fonds sont nécessaires : au moins 8 fonds pour des échiquiers. En pratique, 3 à 5 fonds suffisent. L'introduction de connaissances a priori sur l'objet permet de réduire ce nombre : à la fois au niveau de ses couleurs constituantes, mais aussi au niveau de sa géométrie, par le contrôle des angles de prise de vue à des vues rasantes, qui favorisent les effets de diffraction et réfraction.

Nous utilisons comme autre fonds possibles des fonds unis qui permettent une analyse d'opacité (matting), une fois l'analyse de matière effectuée.

### Reproduction d'apparence et géométrie

Les masques calculés permettent de reconstruire la géométrie de l'objet. Grâce à la gestion explicite de la diffraction, réfraction et des réflexions, la technique que nous proposons respecte les trous propres à l'objet, là où les techniques statiques de fonds unis ne sauraient distinguer entre de la transparence de matière et un trou réel.

La limite du procédé est corrélée avec le rapport de taille entre l'objet que l'on désire reconstruire et la finesse du capteur. Un exemple est une lunette grillagée très fine sur une matière transparente. Notre algorithme propose une matière complète sans trou. Cependant, le rendu doit rendre compte de cette spécificité de la paire. Nous utilisons alors une technique dite de digital matting, dont l'objet est justement de proposer des cartes de transparence pour un point de vue donné, qui rendent compte de la couleur attendue d'un pixel dans lequel des objets de couleur différentes se mélangent, comme un cheveu dont la taille dans l'image plus fine que le pixel. Nous pouvons obtenir alors pour chaque point de vue le masque de matière, la carte d'opacité, et l'image d'apparence. Pour chacune de ces étapes, des fonds différents sont utilisés.

### Digital Matting

La technique de calcul d'opacité devant un fond bleu (connue sous le nom de blue-screen matting) [Smith, A. R., & Blinn, J. F. (1996, August). Blue screen matting. InProceedings of the 23rd annual conference on Computer graphics and interactive techniques (pp. 259-268). ACM] est suffisante pour proposer une carte cohérente d'opacité. Cependant, cette technique ne garantit pas la véracité de cette carte dans le cas d'un objet rétroéclairé par les fonds qui émettent de la lumière. Grâce à la connaissance du masque de matière que notre procédé effectue, et les différents environnements que notre machine propose, nous adaptons les conditions pour une résolution de l'équation d'opacité (matting) et intégrons des contraintes de la scène de prise de vue.

En choisissant les zones pour lesquelles on sait qu'il n'y a pas d'objet, et les zones pour lesquelles on est sûr que la matière est opaque, comme le support, on ajoute des contraintes sur la résolution pour obtenir ainsi une carte d'opacité fidèle à l'environnement de rendu désiré.

Grâce à notre setup, il est possible d'intégrer la résolution d'un environment matting si on veut la reproduction des effets de réfraction.

### Construction explicite des verres

Avec la technique décrite, les verres peuvent être traités intégralement. Cependant, nous désirons aller plus loin en faisant une reconstruction explicite de ces sous-objets car ils sont très dépendants de l'environnement de prise de vue. Leur reconstruction explicite permet de leur affecter des propriétés physiques et dynamiques destinées au moteur de rendu, comme les cartes de réflexions, etc. De plus, certains traitements des verres, comme la polarisation, affectent leur apparence réelle dans le cadre d'un environnement de prise de vue. Il est donc intéressant de pouvoir en maîtriser entièrement les paramètres de rendu.

1. Une fois la matière et la carte d'opacité connues, il est possible d'obtenir un détourage géométrique de la forme des verres. Celui-ci peut être fait manuellement, mais aussi avec des approches de contours actifs qui intègrent des contraintes statistiques sur les formes attendues des verres ([Foulonneau, A., Charbonnier, P., & Heitz, F. (2003, September). Geometric shape priors for reaion-based active contours. In Image Processing, 2003. ICIP 2003. Proceedings. 2003 International Conference on (Vol. 3, pp. III-413). IEEE]). Cette approche par contours actifs ou apprentissage de forme peut être faite en 3D en prenant en compte un ensemble de vues et en déformant une surface de telle façon que la reprojection corresponde aux vues, ou en 2D sur un jeu de vues connu qui a servi à l'apprentissage. Il faut alors utiliser depuis ces contours une méthode 3D de construction de verre par ajustement que nous décrivons ci-après car elle ne nécessite en pratique qu'une vue par verre, et est très rapide :

- Algorithme de création des verres rapide:

    1. Reconstruction de la matière lunette+verres
    2. A partir d'une vue détourée et connaissant les paramètres de camera

        a. projection de la silhouette du verre sur la surface 3D
        b. Ajustement d'une surface d'ordre 2 sur l'objet 3D
        c. Découpage de la surface ajustée selon la silhouette projetée
        d. Extrusion pour atteindre l'épaisseur désirée du verre.

**Analyse et reproduction d'apparence : texture statique + modèle adaptable**

Nous disposons pour un ensemble de vues de la carte de matière, de la carte d'opacité, et de l'image de texture dans les conditions lumineuses désirées.

L'objectif est d'obtenir une apparence fidèle. Nous proposons deux approches.

    1. Le texturage de l'objet en utilisant les vues les plus pertinentes.
    2. La création d'une texture dynamique en fonction du point de vue, par apprentissage de la variance des composantes r,g,b,alpha, entre les images.

Les deux approches gèrent les occultations possibles de l'objet lui-même ou du support de prise de vue.

Nous proposons un outil d'édition et de correction qui permet de générer de points de vue et d'intégrer les modifications faites sur ces points de vue.

### Construction de la couleur diffuse de l'objet

À partir de l'ensemble de vues de l'objet et du modèle géométrique recalé dans chaque image, nous construisons une texture (image) représentative de la couleur diffuse (indépendante de la vue de l'objet). Un paramétrage 2D de la surface de l'objet est nécessaire, une méthode d'obtention est la technique « isocharts » [Kun Zhou et al. "Iso-charts: stretch-driven mesh parameterization usina spectral analysis". Proceedings of the 2004 Eurographics/ACM SIGGRAPH symposium on Geometry processing].

L'approche de construction consiste à calculer pour chaque vue utilisée :

- une texture dépendante de la vue selon le paramétrage 2D de la surface. Cette texture est incomplète car elle tient compte des parties cachées de l'objet
- une carte d'un critère de qualité de chaque échantillon (texel) de la texture ci-dessus. Plusieurs critères peuvent-être utilisés, nous utilisons le produit scalaire entre le vecteur reliant le centre de la caméra au point de surface correspondant au fragment et la normale à la surface en ce point.

### Modèle d'apparence de complexité progressive

Sur la base de la texture diffuse précédemment construite, différents modèles d'apparence de complexité variable peuvent être construit. Cela permet de s'adapter aux capacités de transferts de données, de calcul et de mémoire du terminal de visualisation cible. La texture diffuse obtenu selon l'a méthode décrite plus haut permet (selon les méthodes d'imagerie de synthèse classiques) d'obtenir pour chaque pixel de l'image produite une couleur diffuse qui peut être modifiée de différentes façons :

- Par ajout d'un terme caractérisant l'interaction lumière-matière en le point de surface correspondant. Les équations de Blinn-Phong peuvent par exemple être utilisées [James F. Blinn (1977). "Models of light reflection for computer synthesized pictures". Proc. 4th annual conference on computer graphics and interactive techniques] ou bien tout modèle de fonction de distribution de réflectance (*bidirectional radiance distribution function,* BRDF).

- Par compositions avec d'autres textures représentant les variations dépendantes du point de vue. Une technique possible est celle présentée ci-après. La technique est celle décrite en première partie de cette description avec la composition de textures ACP.

**Positionnement et segmentation géométrique par apprentissage**

Le positionnement des points de support n'a pas d'indice image ou géométrique. Cependant leur position est stable et contrainte, et l'on peut faire un apprentissage statistique sur la vraisemblance de leur position. Pour des lunettes les plaquettes et les points des temps au niveau des branches sont utiles. Nous décrivons ici comment nous adaptons l'objet 3D lunettes sur un visage virtuel pour les placer dans un cadre de réalité augmentée.

**_Recalage 3D_**

Afin de réaliser un essayage virtuel des montures reconstruites en 3D, il peut être intéressant de repositionner dans l'espace ces montures sur un modèle de visage en 3D (un avatar).

Pour ce faire une pose 3D est calculée. Il s'agit de rechercher la meilleure translation et rotation 3D permettant de déplacer un ensemble de points 3D appartenant à la monture vers des points correspondants sur l'avatar. Par exemple des points 3D se situant au niveau des plaquettes de la monture devront se retrouver sur la partie haute du nez de l'avatar.

En pratique, une minimisation de la fonction $f = \sum_p W_p(x_p - (Ry_p + T))$ est réalisée par méthode des moindres carrés. Où T (vecteur translation 3D [3*1]) et R (matrice rotation 3D [3*3]) sont les paramètres recherchés, p est l'indice du point 3D, $x_p$ correspond aux coordonnées 3D du $p^{ème}$ point 3D appartenant à l'avatar, $y_p$ correspond aux coordonnées 3D du $p^{ème}$ point 3D appartenant à la monture, et $W_p$ est une matrice de poids permettant de donner un ordre d'importance sur les points 3D considérés.

Afin de garantir la convergence, une initialisation des paramètres recherchés peut être calculée.

La décomposition en valeurs singulières (SVD) permet d'initialiser simplement la rotation 3D (R). Il s'agit de trouver tout d'abord les isobarycentres ($G_m$ et $G_a$) des 2 ensembles de points $P_m$ (points appartenant à la monture) et $P_a$ (points appartenant à l'avatar), et d'effectuer ensuite une décomposition en valeurs singulières de la matrice $H = \sum_i (Pm_i - Gm)(Pa_i - Ga)^T$ : [U,S,V]=SVD(H). L'initialisation de la rotation est alors $R_0 = VU^T$, et la translation initiale $T_0 = G_a - (R_0{}^*G_m)$.

Ce recalage 3D peut s'effectuer sans intervention d'un utilisateur grâce au repérage automatique de points 3D particuliers sur le maillage de la monture (par exemple des points sur les plaquettes, sur les branches ...).

Le repérage automatique peut se faire de plusieurs façons :

- La reconstruction du support de la paire de lunettes peut être utilisée pour donner la position 3D de points de contacts caractéristiques.
- Des points 2D particuliers peuvent être détectés par des méthodes de traitement d'image classiques sur les images acquises. Il peut s'agir de marquages particuliers appliqués sur la monture ou de points remarquables (plaquettes, charnières, ...) détectables par segmentation ou par classification (descripteurs 2D). La position 3D de ces points repérés sur les images 2D peut ensuite être déduite du calibrage du système d'acquisition et de la reconstruction 3D de la monture.
- Des classifieurs faibles de type LDA, SVM, Perceptron peuvent être construits et entrainés sur des descripteurs 3D pour répondre à des caractéristiques simples et particulières de la monture (bas de plaquette, pont, charnière, fin de branche par exemple). Une segmentation fine de la monture peut même être déduite de la fusion d'informations de ces classifieurs faibles.
- Les points 3D peuvent être donnés par apprentissage statistique (avec ACP par exemple) sur une base de maillages de montures dont les points intéressants ont été préalablement annotés par un expert.

**Références**

[1] A. Laurentini (February 1994). "The visual hull concept for silhouette-based image understanding". IEEE Trans. Pattern Analysis and Machine Intelligence. pages 150-162.

[2] William E. Lorensen, Harvey E. Cline: Marching Cubes: A high resolution 3D surface construction algorithm. In:

Computer Graphics, Vol. 21, Nr. 4, July 1987.

[3] M. Garland and P. Heckbert. Surface Simplification Using Quadric Error Metrics. In Proceedings of SIGGRAPH 97.

[4] Michael S. Floater, "Mean value coordinates", Journal Computer Aided Geometric Design, Volume 20 Issue 1, March 2003.

[5] Kun Zhou, John Synder, Baining Guo, and Heung-Yeung Shum, "Iso-charts: Stretch-driven Mesh Parameterization using Spectral Analysis", Proceedings of the 2004 Eurographics / ACM SIGGRAPH symposium on Geometry processing, 2004.

[6] Chew, L. Paul (1987). "Constrained Delaunay Triangulations". Proceedings of the Third Annual Symposium on Computational Geometry.

[7] Charles Loop: Smooth Subdivision Surfaces Based on Triangles, M.S. Mathematics thesis, University of Utah, 1987.

[8] Fabrice MERIAUDEAU, Luis Alonzo SANCHEZ SECADES, Gonen EREN, Aytul ERÇIL, Frédéric TRUCHETET, Olivier AUBRETON, David FOFI, "3-D Scanning of Nonopaque Objects by Means of Imaging Emitted Structured Infrared Patterns", IEEE Transactions on Instrumentation & Measurement , 59 (11), pp. 2898-2906, November 2010 lien sur HAL.

[9] Gonen EREN, Olivier AUBRETON, Fabrice MERIAUDEAU, Luis Alonzo SANCHEZ SECADES, David FOFI, Frédéric TRUCHETET, Aytul ERÇIL "Scanning From Heating: 3D Shape Estimation of Transparent Objects from Local Surface Heating", Optics Express, 17 (14), pp. 11457-11468 , Optical Society of America, 2009.

[10] Nikhil R Pal, Sankar K Pal, A review on image segmentation techniques, Pattern Récognition, 1993.

[11] Sagarmay Deb, Overview of image segmentation techniques and searching for future directions of research in content-based image retrieval, 2008 First IEEE International Conférence on UbiMedia Computing (2008).

[12] Ariel Shamir, A survey on Mesh Segmentation Techniques, Computer Graphics Forum Volume 27, Issue 6, pages 1539-1556, September 2008.

[13] Niloy J. Mitra, Leonidas Guibas, Mark Pauly, Symmetrization, ACM Transactions on Graphics (SIGGRAPH), 26(3), 1-8, 2007.

[14] Kun Zhou, John Snyder, Baining Guo, Heung-Yeung Shum, Iso-charts: Stretch-driven Mesh Parameterization using Spectral Analysis, Eurographics Symposium on Geometry Processing, 2004.

## Revendications

1. Procédé mis en œuvre par ordinateur de modélisation d'un objet tridimensionnel à partir d'images bidimensionnelles de cet objet prises sous différents angles selon au moins deux directions, l'objet tridimensionnel étant une paire de lunettes, **caractérisé en ce qu'**il comporte des étapes de :

   - acquisition d'images bidimensionnelles de la paire de lunettes (500), comportant éventuellement des parties transparentes ou réfléchissantes ;
   - détourage (104, 105) d'au moins une partie des images 2D acquises, afin de calculer un ensemble de silhouettes 2D de l'objet (500) à reconstruire ;
   - calcul, sur la base des silhouettes 2D obtenues, d'une représentation volumétrique de l'objet (500) ;
   - conversion, par Marching Cubes, de la représentation volumétrique de l'objet en un maillage surfacique 3D de l'objet (500)
   - application itérative de deux étapes de simplification et de lissage du maillage surfacique 3D de l'objet (500).

2. Procédé selon la revendication 1, **caractérisé en ce qu'**il comporte également une étape de segmentation du modèle numérique de la paire de lunettes (500) en deux branches et le reste de la monture, avec définition des points de pivot.

3. Procédé selon l'une des revendications 1 à 2, **caractérisé en ce qu'**il comporte également une étape de symétrisation des modèles de paires de lunettes.

4. Procédé selon l'une quelconque des revendications 1 à 3, **caractérisé en ce que** l'acquisition d'images est effectuée avec un fond uni ou présentant un motif.

5. Procédé selon l'une quelconque des revendications 1 à 4, **caractérisé en ce que** le détourage (104, 105) utilise un remplissage des trous non désirés du volume 3D, exploitant la reprojection du volume 3D précédemment détouré dans la vue à détourer.

**6.** Procédé selon l'une quelconque des revendications 1 à 5, **caractérisé en ce qu'**il comporte :

- une étape permettant la reconstruction semi-automatique de verre de lunette utilisant le tracé d'un chemin 3D, lui-même déterminé de manière semi-automatique.

**7.** Procédé selon l'une quelconque des revendications 1 à 6, **caractérisé en ce qu'**il comporte :

- une étape de génération de verres de lunettes par approximation paramétrique garantissant une courbure constante.

**8.** Procédé selon l'une quelconque des revendications 1 à 7, **caractérisé en ce qu'**il comprend également :

- une étape de lissage adaptée à des objets manufacturés présentant des courbures constantes par morceau,
- une étape de représentation dynamique de l'apparence d'un objet,
- une étape de rendu photoréaliste d'objet simulant la variation d'apparence liée à l'angle de vue de l'objet.

**9.** Procédé selon l'une quelconque des revendications 1 à 8, **caractérisé en ce qu'**il comporte :

- une étape de production assistée de modèle de paires de lunettes proche d'un modèle existant.

**10.** Procédé selon l'une quelconque des revendications 1 à 9, **caractérisé en ce qu'**il comprend également :

- une étape de solidarisation en mouvement de l'objet à un support, pivotant selon un axe vertical, disposé face à au moins deux appareils de prise de vues espacés verticalement, l'acquisition d'images étant effectuée durant une rotation de l'objet autour de l'axe vertical,
- une étape de correction colorimétrique des images acquises, l'étape de correction colorimétrique comprenant :

- l'obtention d'un ensemble de couples couleur réelle - couleur enregistrée par les appareils de prise de vues,
- l'établissement d'un modèle paramétrique de fonction de transfert couleur réelle - couleur enregistrée, utilisant un modèle générique de transformation non rigide de l'espace de couleur, le modèle générique prenant la forme d'une spline de type plaque mince.

**11.** Procédé selon l'une quelconque des revendications 1 à 10, **caractérisé en ce qu'**il comportant également une étape (103) de calibrage géométrique consistant en la prise de vues d'une mire de géométrie connue par les appareils de prise de vues et le calcul des paramètres intrinsèques et extrinsèques des caméras de la machine d'acquisition.

**12.** Procédé selon la revendication 11, **caractérisé en ce que** l'étape de calibrage géométrique emploie une technique de *structure-from-motion* et utilise une mire de calibrage composé de sphères métalliques colorées, de diamètre connu et maintenues à des positions adaptées à limiter les occultations de sphères entre elles et à répartir uniformément leurs positions dans le champ visuel des caméras,
chaque caméra acquérant une séquence d'image de la mire à différentes orientations obtenues en plaçant la mire sur un plateau tournant autour de l'axe vertical,
le procédé comportant une étape de repérage, dans un ensemble de vues de la mire de calibrage, de la position de la projection des centres de chaque sphère colorée, et une étape de calcul, sur la base de ces positions, des paramètres internes et des positions et orientations de chaque appareil de prise de vues.

**13.** Procédé selon la revendication 12, **caractérisé en ce que** l'étape de calcul détermine :

des transformations 3D rigides permettant d'exprimer un point dans le repère de l'objet en un point dans les repères de chaque caméra.
des paramètres de l'opération de projection permettant de calculer les coordonnées 2D dans l'image produite par chaque caméra d'un point exprimé dans le repère de celle-ci.
d'un facteur d'échelle permettant d'exprimer les points 3D de l'objet dans un repère métrique.

**14.** Procédé selon l'une quelconque des revendications 11 à 13, caractérisé en ce l'étape de calibrage géométrique (103) comprend trois étapes principales :

- extraction des projections des amers 3D (centres des sphères) : cette étape comprenant une série de traitements des images d'entrée, conduisant à la détermination du centre des empreintes (supposées) circulaires des projections des sphères,
- reconstruction métrique de la scène : cette étape comprenant une reconstruction initiale de la scène (points 3D) et des caméras (paramètres internes et externes) et la détermination des trajectoires elliptiques de chaque amer.
- ajustement de faisceaux : cette étape permettant de raffiner les paramètres trouvés à l'étape précédente, à la fois les paramètres internes et externes des caméras et les positions des amers 3D.

15. Procédé selon l'une quelconque des revendications 11 à 14, **caractérisé en ce que** l'étape de calibrage géométrique (103) géométrique comporte :

- une étape préalable consistant à déterminer la distribution des couleurs de chaque sphère dans un espace colorimétrique adapté, étape dans laquelle, étant donnée une image comportant l'ensemble des sphères, et une sélection de zones recouverte entièrement par l'image de chaque sphère, les caractéristiques de cette distribution de couleur sont déterminées,
- une étape d'extraction des sphères durant laquelle, pour chaque image, et pour chaque sphère, on répète les étapes suivantes :

  i- classification des pixels en deux classes Sphère / Fond selon la probabilité d'être dans l'image de la sphère considérée,
  ii- Extraction des composantes connexes dans le masque de la classe Sphère,
  iii- Rejet des composantes connexes non satisfaisantes selon leur propriété géométrique : rapport d'élongation, aire,
  iv- Sur chaque composante non rejetée à l'étape iii, extraction des points contours, dans l'image originale,
  v- Ajustement robuste et précis d'un cercle sur les points de contours,
  vi- Extraction du centre du cercle,

- une étape de détermination de la présence ou non dans l'image de la sphère considérée
- et, dans le cas où la sphère est effectivement visible dans sa totalité dans l'image, d'obtention du centre de sa projection.

**Patentansprüche**

1. Rechnerimplementiertes Verfahren zur Modellierung eines dreidimensionalen Objekts auf Grundlage von zweidimensionalen Bildern dieses Objekts, die in mindestens zwei Richtungen unter unterschiedlichen Winkeln aufgenommen wurden, wobei das dreidimensionale Objekt eine Brille ist, **dadurch gekennzeichnet, dass** es Schritte umfasst:

   - Erfassen zweidimensionaler Bilder der Brille (500), aufweisend eventuell transparente oder reflektierende Teile;
   - Beschneiden (104, 105) mindestens eines Teils der erfassten 2D-Bilder, um einen Satz von 2D-Umrissen des zu rekonstruierenden Objekts (500) zu berechnen;
   - Berechnen, auf der Basis der erhaltenen 2D-Umrisse, einer volumetrischen Darstellung des Objekts (500),
   - Umwandeln der volumetrischen Darstellung des Objekts in ein 3D-Flächenraster des Objekts (500) durch Marching Cubes;
   - iteratives Anwenden von zwei Schritten des Vereinfachens und des Glättens des 3D-Flächenrasters des Objekts (500).

2. Verfahren nach Anspruch 1, **dadurch gekennzeichnet, dass** es ebenfalls einen Schritt des Segmentierens des digitalen Modells der Brille (500) in zwei Bügel und den Rest der Fassung, mit Definition der Gelenkpunkte, umfasst.

3. Verfahren nach einem der Ansprüche 1 bis 2, **dadurch gekennzeichnet, dass** es ebenfalls einen Schritt der Symmetrierung der Brillenmodelle umfasst.

4. Verfahren nach einem der Ansprüche 1 bis 3, **dadurch gekennzeichnet, dass** die Bilderfassung mit einem einfarbigen oder ein Motiv aufweisenden Hintergrund durchgeführt wird.

**5.** Verfahren nach einem der Ansprüche 1 bis 4, **dadurch gekennzeichnet, dass** das Beschneiden (104, 105) ein Ausfüllen der unerwünschten Leerstellen des 3D-Volumens umfasst, das die Rückprojektion des zuvor beschnittenen 3D-Volumens in die zu beschneidende Ansicht nutzt.

**6.** Verfahren nach einem der Ansprüche 1 bis 5, **dadurch gekennzeichnet, dass** es umfasst:

- einen Schritt, der die halbautomatische Brillenglas-Rekonstruktion unter Verwendung des Verlaufs eines 3D-Pfades ermöglicht, welcher seinerseits halbautomatisch bestimmt wird.

**7.** Verfahren nach einem der Ansprüche 1 bis 6, **dadurch gekennzeichnet, dass** es umfasst:

- einen Schritt des Generierens von Brillengläsern durch parametrische Annäherung, die eine konstante Krümmung gewährleistet.

**8.** Verfahren nach einem der Ansprüche 1 bis 7, **dadurch gekennzeichnet, dass** es ebenfalls umfasst:

- einen Schritt des Glättens, der für hergestellte Objekte geeignet ist, die stückweise konstante Krümmungen aufweisen,
- einen Schritt der dynamischen Darstellung der Gestalt eines Objekts,
- einen Schritt der fotorealistischen Objektwiedergabe, die die mit dem Ansichtswinkel des Objekts zusammenhängende Gestaltvariation simuliert.

**9.** Verfahren nach einem der Ansprüche 1 bis 8, **dadurch gekennzeichnet, dass** es umfasst:

- einen Schritt der modellgestützten Produktion von Brillen, die einem vorhandenen Modell nahekommen.

**10.** Verfahren nach einem der Ansprüche 1 bis 9, **dadurch gekennzeichnet, dass** es umfasst:

- einen Schritt des bewegungsfesten Verbindens des Objekts mit einer um eine vertikale Achse drehenden Halterung, die gegenüber mindestens zwei vertikal beabstandeten Vorrichtungen zur Aufnahme von Ansichten angeordnet ist, wobei die Bilderfassung während einer Drehung des Objekts um die vertikale Achse durchgeführt wird,
- einen Schritt der kolorimetrischen Korrektur der erfassten Bilder, wobei der Schritt der kolorimetrischen Korrektur umfasst:

- Erhalten eines Satzes von Paaren reelle Farbe
- von den Ansichtsaufnahmevorrichtungen aufgezeichnete Farbe,
- Erstellen eines parametrischen Übertragungsfunktionsmodells reelle Farbe - aufgezeichnete Farbe unter Verwendung eines generischen Modells der nicht-starren Transformation des Farbraums, wobei das generische Modell die Form einer Spline vom Typ einer dünnen Platte annimmt.

**11.** Verfahren nach einem der Ansprüche 1 bis 10, **dadurch gekennzeichnet, dass** es ebenfalls einen Schritt (103) der geometrischen Kalibrierung aufweist, der in der Aufnahme von Ansichten eines Prüfmusters von bekannter Geometrie durch die Ansichtsaufnahmevorrichtungen und der Berechnung der intrinsischen und extrinsischen Parameter der Kameras des Erfassungsgeräts besteht.

**12.** Verfahren nach Anspruch 11, **dadurch gekennzeichnet, dass** der Schritt der geometrischen Kalibrierung eine *Structure-from-Motion-Technik* nutzt und ein Kalibrierungsprüfmuster verwendet, das aus farbigen Metallkugeln zusammengesetzt ist, die von bekanntem Durchmesser sind und an Positionen gehalten werden, welche dafür geeignet sind, die Verdeckungen von Kugeln untereinander zu begrenzen und ihre Positionen gleichmäßig im Sichtfeld der Kameras zu verteilen,
wobei jede Kamera eine Bildfolge des Prüfmusters in unterschiedlichen Ausrichtungen erfasst, die unter Platzieren des Prüfmusters auf einem um die vertikale Achse drehenden Teller erhalten werden,
wobei das Verfahren einen Schritt des Ermittelns der Position der Projektion der Mittelpunkte jeder farbigen Kugel in einem Satz von Ansichten des Kalibrierungsprüfmusters, und einen Schritt des Berechnens, auf der Basis dieser Positionen, der internen Parameter und der Positionen und Ausrichtungen jeder Ansichtsaufnahmevorrichtung umfasst.

**13.** Verfahren nach Anspruch 12, **dadurch gekennzeichnet, dass** der Berechnungsschritt bestimmt:

starre 3D-Transformationen, die es ermöglichen, einen Punkt im Koordinatensystem des Objekts als einen Punkt in den Koordinatensystemen jeder Kamera auszudrücken,
Parameter der Projektionsoperation, die es ermöglichen, die 2D-Koordinaten in dem von jeder Kamera produzierten Bild eines im Koordinatensystem derselben ausgedrückten Punkts zu berechnen,
einen Skalenfaktor, der es ermöglicht, die 3D-Punkte des Objekts in einem metrischen Koordinatensystem auszudrücken.

**14.** Verfahren nach einem der Ansprüche 11 bis 13, **dadurch gekennzeichnet, dass** der Schritt der geometrischen Kalibrierung (103) drei Hauptschritte umfasst:

- Extrahieren der Projektionen der 3D-Marken (Mittelpunkte der Kugeln): wobei dieser Schritt eine Reihe von Verarbeitungen der Eingangsbilder umfasst, die zur Bestimmung des Mittelpunkts der (angenommenen) kreisrunden Abdrücke der Projektionen der Kugeln führen,
- metrisches Rekonstruieren der Szene: wobei dieser Schritt eine anfängliche Rekonstruktion der Szene (3D-Punkte) und der Kameras (interne und externe Parameter) und das Bestimmen der elliptischen Bahnen jeder Marke umfasst,
- Anpassen von Strahlen: wobei dieser Schritt ermöglicht, die im vorhergehenden Schritt gefundenen Parameter, gleichzeitig die internen und externen Parameter der Kameras und die Positionen der 3D-Marken, zu verfeinern.

**15.** Verfahren nach einem der Ansprüche 11 bis 14, **dadurch gekennzeichnet, dass** der Schritt der geometrischen Kalibrierung (103) umfasst:

- einen vorausgehenden Schritt, der darin besteht, die Verteilung der Farben jeder Kugel in einem geeigneten kolorimetrischen Raum zu bestimmen, Schritt, bei dem ausgehend von einem Bild, das den Satz der Kugeln enthält, und einer Auswahl von Bereichen, die vollständig vom Bild jeder Kugel bedeckt wird, die Merkmale dieser Farbverteilung bestimmt werden,
- einen Schritt des Extrahierens der Kugeln, während dem die folgenden Schritte für jedes Bild und für jede Kugel wiederholt werden:

i- Klassifizieren der Pixel in zwei Klassen Kugel / Hintergrund gemäß der Wahrscheinlichkeit, dass es sich im Bild der betreffenden Kugel befindet,
ii- Extrahieren der verbundenen Komponenten in der Maske der Klasse Kugel,
iii- Verwerfen der nicht zufriedenstellenden verbundenen Komponenten gemäß ihrer geometrischen Eigenschaft: Ausdehnungsverhältnis, Flächeninhalt,
iv- an jeder Komponente, die im Schritt iii nicht verworfen wurde, Extrahieren der Konturenpunkte im Originalbild,
v- robustes und präzises Anpassen eines Kreises auf den Konturenpunkten,
vi- Extrahieren des Mittelpunkts des Kreises,

- einen Schritt des Bestimmens des Befindens oder Nichtbefindens im Bild der betreffenden Kugel,
- und, in dem Fall, in dem die Kugel tatsächlich in ihrer Gänze im Bild sichtbar ist, des Erhaltens des Mittelpunkts ihrer Projektion.

**Claims**

**1.** Method implemented by computer for modelling a three-dimensional object, from two-dimensional images of this object, taken from different angles along at least two directions, the three-dimensional object being a pair of spectacles, **characterised in that** it includes steps of:

- acquiring two-dimensional images of the pair of spectacles (500), possibly including transparent or reflective parts,
- trimming (104, 105) at least one part of the 2D images acquired, in order to calculate a set of 2D silhouettes of the object (500) to be reconstructed,
- calculating, based on the 2D silhouettes obtained, a volumetric representation of the object (500);
- converting, by Marching Cubes, the volumetric representation of the object into a 3D surface mesh of the object (500),
- iteratively applying two steps of simplifying and smoothing the 3D surface mesh of the object (500).

2.  Method according to claim 1, **characterised in that** it also includes a step of segmenting the digital model of the pair of spectacles (500) into two branches and the remainder of the frame, defining the pivot points.

3.  Method according to one of claims 1 to 2, **characterised in that** it also includes a step of symmetrising models of pairs of spectacles.

4.  Method according to any one of claims 1 to 3, **characterised in that** the acquisition of images is carried out with a solid bottom or a bottom having a pattern.

5.  Method according to any one of claims 1 to 4, **characterised in that** the trimming (104, 105) uses a filling of undesired holes of the 3D volume, utilising the reprojection of the 3D volume trimmed beforehand in the view to be trimmed.

6.  Method according to any one of claims 1 to 5, **characterised in that** it includes:

    - a step making it possible for the semi-automatic reconstruction of spectacles lenses using the trace of a 3D path, determined semi-automatically itself.

7.  Method according to any one of claims 1 to 6, **characterised in that** it comprises:

    - a step of generating spectacles lenses by parametric approximation, guaranteeing a constant curve.

8.  Method according to any one of claims 1 to 7, **characterised in that** it also comprises:

    - a smoothing step adapted to objects produced having curvatures which are constant per piece,
    - a step of dynamically representing the appearance of an object,
    - a step of the photorealistic recording of an object simulating the variation in appearance linked to the viewing angle of the object.

9.  Method according to any one of claims 1 to 8, **characterised in that** it includes:

    - a step of the assisted production of models of pairs of spectacles close to an existing model.

10. Method according to any one of claims 1 to 9, **characterised in that** it also comprises:

    - a step of securing in movement the object to a support, pivoting about a vertical axis, arranged facing at least two shooting apparatuses spaced vertically, the acquisition of images being carried out during a rotation of the object about the vertical axis,
    - a step of the colorimetric correction of the images acquired, the colorimetric correction step comprising:

        - obtaining a set of couples of real colour and colour recorded by the shooting apparatuses,
        - establishing a real colour and recorded colour transfer function parametric model, using a general non-rigid transformation model of the colour space, the general model taking the shape of a thin plate-type spline.

11. Method according to any one of claims 1 to 10, **characterised in that** it also includes a geometric calibration step (103) consisting of shooting a geometric target known by shooting apparatuses and calculating the intrinsic and extrinsic parameters of the cameras of the acquisition machine.

12. Method according to claim 11, **characterised in that** the geometric calibration step uses a *structure-from-motion* technique and uses a calibration target composed of coloured metal spheres, of a known diameter and maintained at positions adapted to limit the occultations of spheres together and to evenly distribute the positions thereof in the field of vision of the cameras,
    each camera acquiring an image sequence of the target at different orientations obtained by placing the target on a plate rotating about the vertical axis,
    the method comprising an identification step, in a set of views of the calibration target, of the position of the projection of the centres of each coloured sphere, and a calculation step, based on these positions, internal parameters, and positions and orientations of each shooting apparatus.

13. Method according to claim 12, **characterised in that** the calculation step determines:

rigid 3D transformations making it possible to express a point in the marker of the object in a point of the markers of each camera,

parameters of the projection operation making it possible to calculate the 2D coordinates in the image produced by each camera of a point expressed in the marker thereof,

a scale factor making it possible to express the 3D points of the object in a metric marker.

14. Method according to any one of claims 11 to 13, **characterised in that** the geometric calibration step (103) comprises three main steps:

- extraction of projections of 3D marks (sphere centres): this step comprising a series of input image processing, leading to the determination of the centre of (supposed) circular prints of the projections of spheres,

- metric reconstruction of the scene: this step comprising an initial reconstruction of the scene (3D points) and cameras (internal and external parameters) and the determination of the elliptic paths of each mark,

- adjustment of beams: this step making it possible to refine the parameters found in the preceding step, both the internal and external parameters of the cameras and the positions of the 3D marks.

15. Method according to any one of claims 11 to 14, **characterised in that** the geometric calibration step (103) comprises:

- a prior step consisting of determining the distribution of the colours of each sphere into an adapted colorimetric space, step wherein, given an image including the set of spheres, and a selection of zones fully covered by the image of each sphere, the features of this colour distribution are determined,

- a step of extracting spheres during which, for each image, and for each sphere, the following steps are repeated:

i. Classification of the pixels into two Sphere/Bottom classes according to the probability of being in the image of the sphere in question,

ii. Extraction of the components connected in the mask of the Sphere class,

iii. Rejection of non-satisfactory components connected according to the geometric property thereof: elongation ratio, area,

iv. On each component not rejected in step iii, extraction of the contour points, in the original image,

v. Robust and precise adjustment of a circle on the contour points,

vi. Extraction of the centre of the circle,

- a step of determining the presence or lack thereof in the image of the sphere in question,

- and, in the event that the sphere is actually entirely visible in the image, of obtaining the centre from the projection thereof.

**Figure 1**

**Figure 2**

**Figure 3**

**Figure 4**

|  |  |
|---|---|
| **40000 triangles** | 1000 triangles |

**Figure 5**

**Figure 6**

**Figure 7**

**Figure 8**

(a)                                                        (b)

**Figure 9**

bille acier ø 20mm

tige aluminium 8mm

| | X | Y | Z |
|---|---|---|---|
| | -3.9 | 10.2 | 31.5 |
| | -3.5 | -6.3 | 29.7 |
| | 0.7 | -13.1 | 27.7 |
| | 7.4 | -4.9 | 25.5 |
| | -9.9 | -2.5 | 23.3 |
| | 9.5 | 6.8 | 22.4 |
| | -12.0 | 7.2 | 20.7 |
| | 7.7 | -1.6 | 18.9 |
| | 1.8 | 5.6 | 17.5 |

**Figure 10**

Figure 11

Images de la mire: m caméras, n vues

Figure 12

**Figure 13**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1050305


**Littérature non-brevet citée dans la description**

- Conic Fitting Usina the Geometric Distance. Sturm and Pau Gargallo. ACCV, 2007
- Conic fitting usina the géométric distance. **PETER STURM ; PAU GARGALLO.** Proceedings of the Asian Conference on Computer Vision. Springer, 2007, vol. 2, 784-795
- **CARLO COLOMBO ; DARIO COMANDUCCI ; ALBERTO DEL BIMBO.** Camera calibration with two arbitrary coaxial circles. *Proceedings of ECCV,* 2006, vol. 06, 265-276
- **CARLO COLOMBO ; ALBERTO DEL BIMBO ; FEDERICO PERNICI.** Metric 3d reconstruction and texture acquisition of surfaces of révolution from a single uncalibrated view. *IEEE Transactions on Pattern Analysis and Machine intelligence,* 2005, vol. 27 (1), 99-114
- **ANDREW W. FITZGIBBON ; GEOFF CROSS ; ANDREW ZISSERMAN.** *Automatic 3d model construction for turn-table sequences,* 1998, 155-170
- Bundle adiustment - a modem synthesis. **B. TRIGGS ; P. MCLAUCHLAN ; R. HARTLEY ; A. FITZGIBBON.** Vision Algorithms : Theory and Practice, volume 1883 of Lecture Notes in Computer Science. Springer-Verlag, 2000, vol. 1883, 298-372
- **IHRKE. I. ; KUTULAKOS, K. N. ; LENSCH, H. P. ; MAGNOR, M. ; HEIDRICH, W.** State of the art in transparent and specular obiect reconstruction. *EUROGRAPHICS 2008 STAR-STATE OF THE ART REPORT,* 2008
- Environment matting extensions: Towards higher accuracv and real-time capture. **CHUANG, Y. Y. ; ZONGKER, D. E. ; HINDORFF, J. ; CURLESS, B. ; SALESIN, D. H. ; SZELISKI, R.** Proceedings of the 27th annual conference on Computer graphics and interactive techniques. ACM Press/Addison-Weslev Publishing Co, Juillet 2000, 121-130
- **YAMAZAKI, M. ; IWATA, S. ; XU, G.** Dense 3D reconstruction of specular and transparent obiects using stereo cameras and phase-shift method. *Computer Vision-ACCV,* 2007, 570-579

- **YAMAZAKI, S. ; MOCHIMARU, M. ; KANADE, T.** Inverse volume rendering approach to 3d reconstruction from multiple images. *Computer Vision-ACCV,* 2006, 409-418
- Blue screen matting. **SMITH, A. R. ; BLINN, J. F.** Proceedings of the 23rd annual conference on Computer graphics and interactive techniques. ACM, Août 1996, 259-268
- Geometric shape priors for reaion-based active contours. **FOULONNEAU, A. ; CHARBONNIER, P. ; HEITZ, F.** Image Processing, 2003. ICIP 2003. Proceedings. 2003 International Conference. IEEE, Septembre 2003, vol. 3, III-413
- **KUN ZHOU et al.** Iso-charts: stretch-driven mesh parameterization usina spectral analysis. *Proceedings of the 2004 Eurographics/ACM SIGGRAPH symposium on Geometry processing*
- **JAMES F. BLINN.** Models of light reflection for computer synthesized pictures. *Proc. 4th annual conference on computer graphics and interactive techniques,* 1977
- **A. LAURENTINI.** The visual hull concept for silhouette-based image understanding. *IEEE Trans. Pattern Analysis and Machine Intelligence,* Février 1994, 150-162
- **WILLIAM E. LORENSEN ; HARVEY E. CLINE.** Marching Cubes: A high resolution 3D surface construction algorithm. *Computer Graphics,* Juillet 1987, vol. 21 (4
- **M. GARLAND ; P. HECKBERT.** Surface Simplification Using Quadric Error Metrics. *Proceedings of SIGGRAPH 97*
- **MICHAEL S. FLOATER.** Mean value coordinates. *Journal Computer Aided Geometric Design,* Mars 2003, vol. 20 (1
- **KUN ZHOU ; JOHN SYNDER ; BAINING GUO ; HEUNG-YEUNG SHUM.** Iso-charts: Stretch-driven Mesh Parameterization using Spectral Analysis. *Proceedings of the 2004 Eurographics / ACM SIGGRAPH symposium on Geometry processing,* 2004
- **CHEW, L. PAUL.** Constrained Delaunay Triangulations. *Proceedings of the Third Annual Symposium on Computational Geometry,* 1987

- Smooth Subdivision Surfaces Based on Triangles. **CHARLES LOOP.** M.S. Mathematics thesis. University of Utah, 1987
- **FABRICE MERIAUDEAU ; LUIS ALONZO SANCHEZ SECADES ; GONEN EREN ; AYTUL ERÇIL ; FRÉDÉRIC TRUCHETET ; OLIVIER AUBRETON ; DAVID FOFI.** 3-D Scanning of Nonopaque Objects by Means of Imaging Emitted Structured Infrared Patterns. *IEEE Transactions on Instrumentation & Measurement,* Novembre 2010, vol. 59 (11), 2898-2906
- Scanning From Heating: 3D Shape Estimation of Transparent Objects from Local Surface Heating. **GONEN EREN ; OLIVIER AUBRETON ; FABRICE MERIAUDEAU ; LUIS ALONZO ; SANCHEZ SECADES ; DAVID FOFI ; FRÉDÉRIC TRUCHETET ; AYTUL ERÇIL.** Optics Express. Optical Society of America, 2009, vol. 17, 11457-11468

- **NIKHIL R PAL ; SANKAR K PAL.** A review on image segmentation techniques. *Pattern Récognition,* 1993
- **SAGARMAY DEB.** Overview of image segmentation techniques and searching for future directions of research in content-based image retrieval. *2008 First IEEE International Conférence on UbiMedia Computing,* 2008
- **ARIEL SHAMIR.** A survey on Mesh Segmentation Techniques. *Computer Graphics Forum,* Septembre 2008, vol. 27 (6), 1539-1556
- **NILOY J. MITRA ; LEONIDAS GUIBAS ; MARK PAULY.** Symmetrization. ACM Transactions on Graphics (SIGGRAPH), 2007, vol. 26, 1-8
- **KUN ZHOU ; JOHN SNYDER ; BAINING GUO ; HE-UNG-YEUNG SHUM.** Iso-charts: Stretch-driven Mesh Parameterization using Spectral Analysis. *Eurographics Symposium on Geometry Processing,* 2004